(19) **Europäisches Patentamt / European Patent Office / Office européen des brevets**

(11) **EP 3 797 540 B1**

(12) **EUROPEAN PATENT SPECIFICATION**

(45) Date of publication and mention
of the grant of the patent:
**31.05.2023 Bulletin 2023/22**

(21) Application number: **18780066.9**

(22) Date of filing: **25.09.2018**

(51) International Patent Classification (IPC):
**H04W 28/02** (2009.01)   **H04W 72/04** (2023.01)
**H04L 5/00** (2006.01)

(52) Cooperative Patent Classification (CPC):
**H04W 28/0205; H04L 5/0044;** H04L 5/0091

(86) International application number:
**PCT/EP2018/075993**

(87) International publication number:
**WO 2020/064088 (02.04.2020 Gazette 2020/14)**

(54) **CLIENT DEVICE, NETWORK ACCESS NODE AND METHODS FOR EFFICIENT SCHEDULING OF DATA TRAFFIC**

CLIENT-VORRICHTUNG, NETZZUGANGSKNOTEN UND VERFAHREN ZUR EFFIZIENTEN PLANUNG VON DATENVERKEHR

DISPOSITIF CLIENT, NOEUD D'ACCÈS AU RÉSEAU ET PROCÉDÉS POUR UNE PLANIFICATION EFFICACE DE TRAFIC DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.03.2021 Bulletin 2021/13**

(73) Proprietor: **HUAWEI TECHNOLOGIES CO., LTD.
Shenzhen, Guangdong 518129 (CN)**

(72) Inventors:
• **TENGKVIST, Per**
  **16440 Kista (SE)**
• **CELLIER, Malek Boussif**
  **16440 Kista (SE)**
• **KOUDOURIDIS, George**
  **16440 Kista (SE)**

(74) Representative: **Körber, Martin Hans
Mitscherlich PartmbB
Patent- und Rechtsanwälte
Sonnenstrasse 33
80331 München (DE)**

(56) References cited:
**EP-A1- 2 557 882    US-A1- 2017 019 914**

## Description

### Technical Field

This invention relates to a client device and a network access node for efficient scheduling of data traffic based on data traffic characteristics. Furthermore, the embodiments of the invention also relates to corresponding methods and a computer program.

### Background

Conventional communication networks are agnostic to higher layers traffic demands unless the applications themselves or the hosts where they run use some kind of mechanism to inform the scheduler about the application that originates a traffic flow. Knowing the traffic demands in advance would allow for more efficient resource allocation and scheduling mechanisms. In 5G the anticipated tremendous increase of user equipments (UEs) and internet of things (IoT) devices with different traffic and application requirements implies high computational cost and signalling overhead to the scheduling algorithms. To reduce resource allocation signalling to UEs upon scheduling of small packet transmissions such as voice over IP (VoIP), semi persistent scheduling (SPS) was introduced to enable scheduling of multiple sub frames with a single resource allocation.

Traditionally addressing traffic demands of the UEs required the introduction of quality-of-service (QoS) mechanisms which were used to classify a user's traffic. Based on the QoS class the radio network performed admission control to check that enough radio resources could be made available and provided a radio bearer configured based on the QoS class. The actual scheduling was performed as long as a buffer at a base station in case of downlink or in the UE itself in case of uplink had packets to transmit. This resembles the dynamic scheduling that in addition to the scheduling message also required buffer status indication signalling. When using SPS the base station can schedule several transmissions spanning several subframes, by sending a single scheduling message that contains one resource allocation. SPS has been designed for a QoS class of services where the rate is low so the overhead of the scheduling message can be high, such as VoIP. Since the data rate of VoIP is constant, by knowing that a flow belongs to the VoIP class, it allows for the base station to confidently use the same resource allocation from one transmission to the next. The base station sends the resource allocation over the physical downlink shared channel (PDSCH) and activates/deactivates the transmission by sending downlink control information (DCI) over physical downlink control channel (PDCCH). SPS works currently only for VoIP-like traffic. Reducing the resource allocation signaling for other traffic types requires online traffic recognition and classification. Traffic classification by means of QoS can provide application layer knowledge to the scheduler allowing application-based access policies and/or routing.

US 2017/0019914 discloses a method and a device for proactive allocation of uplink resources. The method is performed in a radio access node in a wireless communication system. The method includes estimating a transmission phase for the periodic uplink data traffic by, for two or more transmission periods, adjusting the timing of an uplink transmission resource allocation for the wireless device in a subsequent transmission period depending on whether an uplink transmission resource allocated in a previous transmission period was used by the wireless device or not. The method further includes proactively allocating uplink transmission resources to the wireless device, such that the timing of the proactively allocated resources matches the estimated transmission phase.

### Summary

An objective of embodiments of the invention is to provide a solution, which mitigates or solves the drawbacks and problems of conventional solutions.

The present invention is defined by client device for a wireless communication system according to first independent claim, a network access mode for a wireless communication system according to the second independent claim, a method for a client device according to third independent claim, a method for a network access node according to fourth independent claim and a computer program with a program code for performing a method according to the independent method claims when the computer program runs on a computer. Additional features of the invention are provided in the dependent claims. In the following, parts of the description and drawings referring to embodiments, which are not covered by the claims are not presented as embodiments of the invention, but as examples useful for understanding the invention.

According to a first aspect of the invention, the above mentioned and other objectives are achieved with a client device for a wireless communication system, the client device being configured to

transmit a first control message to a network access node, wherein the first control message indicates an initial traffic information for a data packet session associated with the client device;

receive a second control message from the network access node in response to the transmission of the first control message, wherein the second control message indicates a first time window for a first moving average for the data packet session and a second time window for a second moving average for the data packet session;
determine an additional traffic information for the data packet session based on the first time window for the first moving average for the data packet session and the second time window for the second moving average for the data packet session;
transmit a third control message to the network access node, wherein the third control message indicates the additional traffic information for the data packet session, wherein the second time window for the second moving average is equal to a product of the first time window for the first moving average multiplied with a scalar factor;
receive a fourth control message from the network access node, wherein the fourth control message indicates a scheduling mode for the data packet session; schedule data packets of the data packet session based on the scheduling mode; wherein the fourth control message further comprises an over-allocation report instruction, determine the over-allocated data packet volume for the scheduled data packet of the data packet session based on the over-allocation report instruction; and transmit a fifth control message to the network access node, wherein the fifth control message indicates the over-allocated data packet volume.

An advantage of the client device according to the first aspect is that it enables communication of information to the network access node that is needed to characterise the traffic originated from and/or terminated at the client device and thereby reduce the signalling required for the client device to provide feedback to the scheduling decisions made by the network access node.

According to the first aspect, the second time window for the second moving average is equal to a product of the first time window for the first moving average multiplied with a scalar factor. An advantage with this implementation form is that it enables a more accurate characterisation and estimation of the expected traffic behaviour of client device's data which allows for a planning of the allocation of the radio resources and a reduction of the resource allocation decisions and the corresponding signalling.

An advantage of the first aspect is that it provides flexibility to effectively react on overestimations in the resource allocation and scheduling decisions. Another advantage is to timely reassess and correct the characterisation of the traffic behaviour of the client device's data in case of traffic pattern change.

In an implementation form of a client device according to the first aspect, determine the initial traffic information for the data packet session comprises

determine a data packet size distribution of the data packet session and an inter-arrival data packet time distribution of the data packet session.

An advantage with this implementation form is that it provides information which enables the reduction of resource allocation decisions and corresponding reduced signalling.

In an implementation form of a client device according to the first aspect, determine the additional traffic information for the data packet session comprises

continuously determine a first moving average value of the data packet session based on the first time window for the first moving average,

continuously determine a second moving average of the data packet session based on the second time window for the second moving average.

An advantage with this implementation form is that it provides information which allows for a more accurate characterisation and estimation of the expected traffic behaviour of the client device's data, and a plan of future resource allocation decisions and corresponding reduced signalling.

In an implementation form of a client device according to the first aspect, the first moving average value is a first moving average throughput value or a first moving average data rate value, and wherein the second moving average value is a second moving average throughput value or a second moving average data rate value.

An advantage with this implementation form is that it provides information which allows for a more accurate characterisation and determination of the expected traffic behaviour of the client device's data in advance, and the creation a plan of future resource allocation decisions. A further advantage is the reduction of the computational complexity and the provision of resource allocation services to more client devices due to reduced number of resource allocation decisions and the corresponding reduced signalling.

In an implementation form of a client device according to the first aspect, the second control message further indicates a step size for the determination of the first moving average value and the second moving average value, and the client device is configured to

continuously determine the first moving average value of the data packet session based on the first time window for the first moving average and according to the step size,

continuously determine the second moving average of the data packet session based on the second time window for the second moving average and according to the step size.

An advantage with this implementation form is that it provides information which allows for a timely determination of the traffic behaviour of the client device's data and its traffic demands in advance. A further advantage is that it allows for an effective resource allocation in terms of fewer computational processing for the resource allocation decisions and lower signalling overhead.

In an implementation form of a client device according to the first aspect, the fourth control message further comprises a buffer state report instruction, and the client device is configured to

determine a buffer state for the data packet session;

transmit a sixth control message to the network access node, wherein the sixth control message indicates the buffer state of the data packet session.

An advantage with this implementation form is that it provides necessary information for correct estimation of future traffic demands and the determination of effective resource allocation and client device scheduling decisions. To further reduce the amount of signalling messages the content of the sixth control message can be included in the fifth control message.

In an implementation form of a client device according to the first aspect, the scheduling mode comprises a scheduled data packet volume, a scheduling period, a scheduling start time instance, and a data packet transmission spreading pattern.

An advantage with this implementation form is that it reduces signalling overhead in terms of the number of signalling messages as it includes the resource allocation decisions for the traffic at the client device for multiple future resource allocation occasions.

According to a second aspect of the invention, the above mentioned and other objectives are achieved with a network access node for a wireless communication system, the network access node being configured to

receive a first control message from a client device, wherein the first control message indicates an initial traffic information for a data packet session associated with the client device;

determine a first time window for a first moving average for the data packet session and a second time window for a second moving average for the data packet session based on the initial traffic information for the data packet session;

transmit a second control message to the client device, wherein the second control message indicates the first time window for the first moving average for the data packet session and the second time window for the second moving average for the data packet session, wherein the initial traffic information for the data packet session comprises a data packet size distribution of the data packet session and an inter-arrival data packet time distribution of the data packet session, and wherein the network access node is configured to determine the first time window for the first moving average based on the data packet size distribution of the data packet session and the inter-arrival data packet time distribution of the data packet session; determine a scalar factor based on the data packet size distribution of the data packet session and the inter-arrival data packet time distribution of the data packet session, determine the second time window for the second moving average equal to a product of the first time window for the first moving average multiplied with the scalar factor; receive a third control message from the client device in response to the transmission of the second control message, wherein the third control message indicates an additional traffic information for the data packet session comprising a first moving average value of the data packet session and a second moving average of the data packet session; determine the scheduling mode for the data packet session based on the first moving average value of the data packet session and the second moving average of the data packet session; transmit a fourth control message to the client device, wherein the fourth control message indicates the scheduling mode for the data packet session; receive a fifth control message from the client device, wherein the fifth control message indicates an over-allocated data packet volume for the data packet session; determine an updated scheduling mode for the client device based on the over-allocated data packet volume for the data packet session; and transmit an updated fourth control message to the client device, wherein the updated fourth control message indicates the updated scheduling mode.

An advantage of the network access node according to the second aspect is that it enables communication of information that is needed to determine a configuration of the parameters to be monitored so as to enable the characterisation the traffic originated from and/or terminated at the client device and the determination in advance of the resource allocation for multiple scheduling occasions.

An advantage of the second aspect is that it allows for the characterisation and estimation of client device's future traffic demand and the determination of the resource allocations for multiple scheduling occasions in advance.

An advantage of the second aspect is that it allows for a timely determination of the traffic behaviour of the client device's data and its traffic demands in advance. A further advantage is that it allows for an effective resource allocation in terms of fewer scheduling decisions and lower corresponding scheduling overhead.

In an implementation form of a network access node according to the second aspect, the scheduling mode comprises a scheduled data packet volume, a scheduling time period, a scheduling start time instance, and a data packet transmission spreading pattern.

An advantage with this implementation form is that it reduces signalling overhead in terms of the number of signalling messages as it includes the resource allocation decisions for the traffic at the client device for multiple future resource allocation occasions.

In an implementation form of a network access node according to the second aspect, the network access node is further configured to

determine the scheduling mode based on a comparison of the additional traffic information with one or more threshold values.

An advantage with this implementation form is that it allows for correct estimation of future traffic demands and the determination of effective resource allocation and user scheduling decisions.

In an implementation form of a network access node according to the second aspect, the fourth control message further comprises an over-allocation report instruction, and wherein the network access node is configured to

receive a fifth control message from the client device, wherein the fifth control message indicates an over-allocated data packet volume for the data packet session;

determine an updated scheduling mode for the client device based on the over-allocated data packet volume for the data packet session;

transmit an updated fourth control message to the client device, wherein the updated fourth control message indicates the updated scheduling mode.

An advantage with this implementation form is that it provides flexibility to effectively react on overestimations in the resource allocation and scheduling decisions. Another advantage is to timely reassess and correct the characterisation of the traffic behaviour of the client device's data in case of traffic pattern change.

In an implementation form of a network access node according to the second aspect, the scheduling mode further comprises a buffer state report instruction, and the network access node is further configured to

receive a sixth control message from the client device, wherein the sixth control message indicates a buffer state of the data packet session.

An advantage with this implementation form is that it allows for a correct estimation of future traffic demands and the determination of effective resource allocation and user scheduling decisions. To further reduce the amount of signalling messages the content of the sixth control message can be included in the fifth control message.

According to a third aspect of the invention, the above mentioned and other objectives are achieved with a method for a client device, the method comprises

transmitting a first control message to a network access node, wherein the first control message indicates an initial traffic information for a data packet session associated with the client device;

receiving a second control message from the network access node [in response to the transmission of the first control message], wherein the second control message indicates a first time window for a first moving average for the data packet session and a second time window for a second moving average for the data packet session;

determining an additional traffic information for the data packet session based on the first time window for the first moving average for the data packet session and the second time window for the second moving average for the data packet session;

transmitting a third control message to the network access node, wherein the third control message indicates the additional traffic information for the data packet session, receiving a fourth control message from the network access node, wherein the fourth control message indicates a scheduling mode for the data packet session; scheduling data packets of the data packet session based on the scheduling mode, wherein the fourth control message further comprises an over-allocation report instruction, determining an over-allocated data packet volume for the scheduled data packet of the data packet session based on the over-allocation report instruction; and transmitting a fifth control message to the network access node, wherein the fifth control message indicates the over-allocated data packet volume.

The method according to the third aspect is extended into implementation forms corresponding to the implementation forms of the client device according to the first aspect. Hence, an implementation form of the method comprises the feature(s) of the corresponding implementation form of the client device.

The advantages of the methods according to the third aspect are the same as those for the corresponding implementation forms of the client device according to the first aspect.

According to a fourth aspect of the invention, the above mentioned and other objectives are achieved with a method for a network access node, the method comprises

receiving a first control message from a client device, wherein the first control message indicates an initial traffic information for a data packet session associated with the client device;

determining a first time window for a first moving average for the data packet session and a second time window for a second moving average for the data packet session based on the initial traffic information for the data packet session;

transmitting a second control message to the client device, wherein the second control message indicates the first time window for the first moving average for the data packet session and the second time window for the second moving average for the data packet session, wherein the initial traffic information for the data packet session comprises a data packet size distribution of the data packet session and an inter-arrival data packet time distribution of the data packet session, and wherein the network access node is configured to determining the first time window for the first moving average based on the data packet size distribution of the data packet session and the inter-arrival data packet time distribution of the data packet session; determining a scalar factor based on the data packet size distribution of the data packet session and the inter-arrival data packet time distribution of the data packet session, determining the second time window for the second moving average equal to a product of the first time window for the first moving average multiplied with the scalar factor; receiving a third control message from the client device in response to the transmission of the second control message, wherein the third control message indicates an additional traffic information for the data packet session comprising a first moving average value of the data packet session and a second moving average of the data packet session; determining the scheduling mode for the data packet session based on the first moving average value of the data packet session and the second moving average of the data packet session; transmitting a fourth control message to the client device, wherein the fourth control message indicates the scheduling mode for the data packet session; receiving a fifth control message from the client device, wherein the fifth control message indicates an over-allocated data packet volume for the data packet session; determining an updated scheduling mode for the client device based on the over-allocated data packet volume for the data packet session; and transmitting an updated fourth control message to the client device, wherein the updated fourth control message indicates the updated scheduling mode.

The method according to the fourth aspect is extended into implementation forms corresponding to the implementation forms of the network access node according to the second aspect. Hence, an implementation form of the method comprises the feature(s) of the corresponding implementation form of the network access node.

The advantages of the methods according to the fourth aspect are the same as those for the corresponding implementation forms of the network access node according to the second aspect.

The invention also relates to a computer program, characterized in program code, which when run by at least one processor causes said at least one processor to execute any method according to embodiments of the invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the embodiments of the invention will be apparent from the following detailed description.

**Brief Description of the Drawings**

The appended drawings are intended to clarify and explain different embodiments of the invention, in which:

- Fig. 1 shows a client device according to an embodiment of the invention;
- Fig. 2 shows a method for a client device according to an embodiment of the invention;
- Fig. 3 shows a network access node according to an embodiment of the invention;
- Fig. 4 shows a method for a network access node according to an embodiment of the invention;
- Fig. 5 shows a wireless communication system according to an embodiment of the invention;
- Fig. 6 shows a signalling diagram illustrating embodiments of the invention;
- Fig. 7 shows a state diagram according to an embodiment of the invention;
- Fig. 8 shows a data diagram illustrating measured values of the first and the second moving average as a time series of traffic with key state conditions that are used to determine resource allocations;
- Fig. 9 shows the scheduling decision time and the execution time of a cyclic burst scheduling over multiple radio frames and corresponding transmission intervals according to an embodiment of the invention;
- Fig. 10 shows the scheduling decision time and the execution time of a burst scheduling over multiple radio frames and corresponding transmission intervals, in addition to the traffic arrival and resource allocation of the scheduling according to an embodiment of the invention;
- Fig. 11 shows different values of the average delay and time spreading indicator corresponding to different TTI scheduling patterns according to embodiments of the invention;
- Fig. 12 shows frequency-time diagram illustrating resource allocations determined by the network access node according to burst and cyclic burst scheduling state according to embodiments of the invention; and
  Fig. 13 shows a flow chart of an embodiment of the invention.

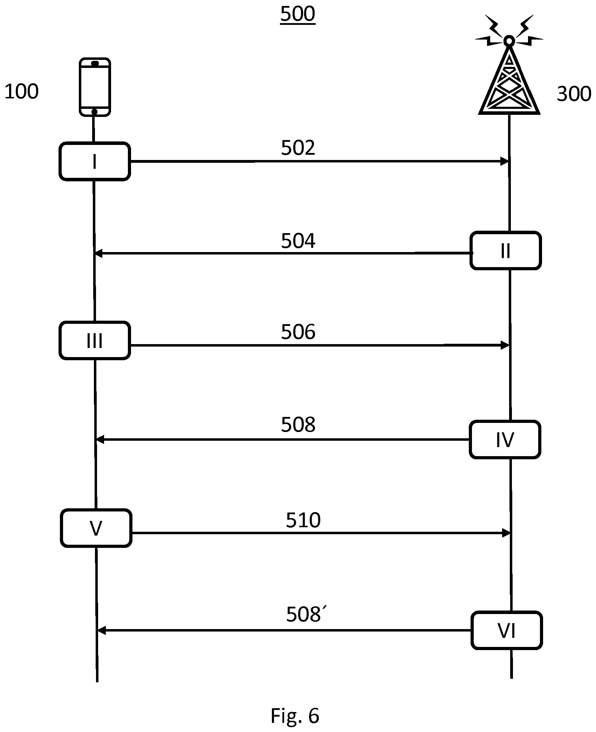

It is noted that embodiments in Fig. 6 to 13 are not part of the invention, but illustrative examples necessary for understanding the invention.


## Detailed Description

The solutions proposed in conventional solutions for gaining knowledge about traffic demands have several shortcomings. Solutions based on the transport layer port information may not be feasible as port information has become obsolete since applications mostly use the same transport port (usually the well-known ports for HTTP or HTTPS) or dynamic port negotiating mechanisms. Meanwhile, encrypted traffic is becoming the norm in most applications, making it difficult to use solutions based on packet inspection. Despite the obvious potential of machine learning, there are challenges in making such an algorithm efficient in terms of resource consumption (such as computing, memory, etc.) and able to quickly react and perform resource allocation online based on both the first order and the second order traffic statistics. However, traffic classification per se is not enough to reduce the number of scheduling decisions and extend the SPS to other traffic types than traffic with low constant rate. Traffic that is carried on top of HTTP- and TCP-protocols such as DASH-traffic would benefit from proactive solutions that may allow for predicting the traffic for several subframes ahead and allocated resources with fewer resource allocation signals.

Consequently, an objective of the invention is to reduce the number of scheduling decisions and the associated scheduling messages for a large number of applications and user traffic by means of proactive scheduling. The inventors have realised that this can be done by offloading the dynamic scheduler from traffic that is better suited to proactive scheduling strategies, leaving the dynamic scheduler with better preconditions in serving the more difficult users with adequate QoS. Proactive scheduling strategies corresponds to the scheduling of several transmissions spanning several subframes. Proactive scheduling is enabled by means of a traffic profiler who determines the volume and the scheduling transmission interval. Within one transmission scheduling interval only one single resource allocation message is sent. The determination of the data volume and the transmission interval for a user corresponds to a prediction of a user's traffic that is built on moving averages of data arrival rate within determined time window periods of different sizes. Therefore, a client device, a network access node and corresponding methods are herein presented.

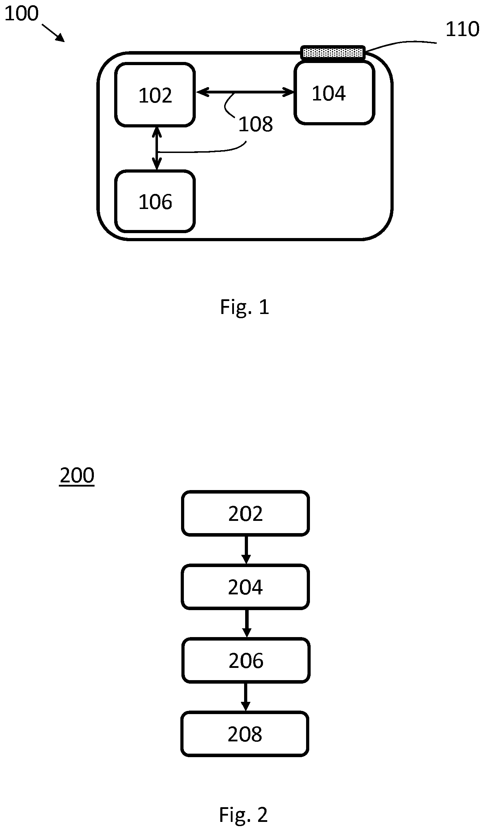

Fig. 1 shows a client device 100 according to an embodiment of the invention. In the embodiment shown in Fig. 1, the client device 100 comprises a processor 102, a transceiver 104 and a memory 106. The processor 102 is coupled to the transceiver 104 and the memory 106 by communication means 108 known in the art. The client device 100 further comprises an antenna or antenna array 110 coupled to the transceiver 104, which means that the client device 100 is configured for wireless communications in a wireless communication system. That the client device 100 is configured to perform certain actions can in this disclosure be understood to mean that the client device 100 comprises suitable means, such as e.g. the processor 102 and the transceiver 104, configured to perform said actions.

According to embodiments of the invention the client device 100 is configured to transmit a first control message 502 to a network access node 300. The first control message 502 indicates an initial traffic information for a data packet session associated with the client device 100. The client device 100 is further configured to receive a second control message 504 from the network access node 300 in response to the transmission of the first control message 502. The second control message 504 indicates a first time window for a first moving average for the data packet session and a second time window for a second moving average for the data packet session. Based on the first time window for the first moving average for the data packet session and the second time window for the second moving average for the data packet session, the client device 100 is configured to determine an additional traffic information for the data packet session. The client device 100 is further configured to transmit a third control message 506 to the network access node 300. The third control message 506 indicates the additional traffic information for the data packet session.

Fig. 2 shows a flow chart of a corresponding method 200 which may be executed in a client device 100, such as the one shown in Fig. 1. The method 200 comprises transmitting 202 a first control message 502 to a network access node 300, wherein the first control message 502 indicates an initial traffic information for a data packet session associated with the client device 100. The method 200 further comprises receiving 204 a second control message 504 from the network access node 300 in response to the transmission of the first control message 502, wherein the second control message 504 indicates a first time window for a first moving average for the data packet session and a second time window for a second moving average for the data packet session. The method 200 further comprises determining 206 an additional traffic information for the data packet session based on the first time window for the first moving average for the data packet session and the second time window for the second moving average for the data packet session. Furthermore, the method 200 comprises transmitting 208 a third control message 506 to the network access node 300, wherein the third control message 506 indicates the additional traffic information for the data packet session.

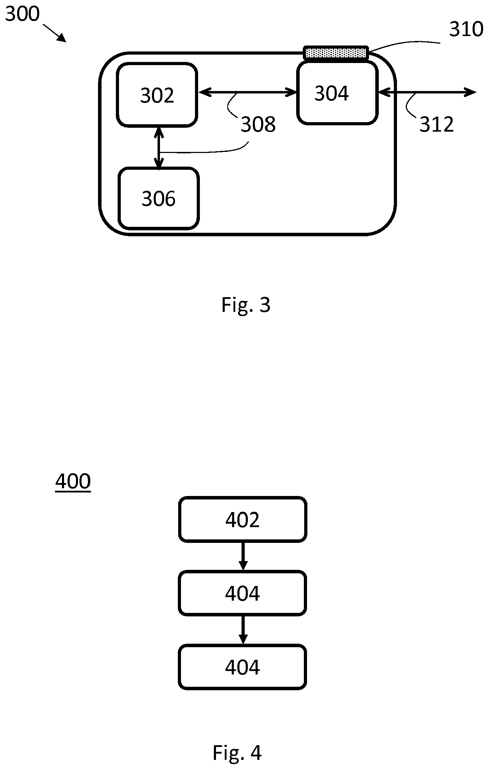

Fig. 3 shows a network access node 300 according to an embodiment of the invention. In the embodiment shown in Fig. 3, the network access node 300 comprises a processor 302, a transceiver 304 and a memory 306. The processor 302 is coupled to the transceiver 304 and the memory 306 by communication means 308 known in the art. The network access node 300 may be configured for both wireless and wired communications in wireless and wired communication systems, respectively. The wireless communication capability is provided with an antenna or antenna array 310 coupled to the transceiver 304, while the wired communication capability is provided with a wired communication interface 312 coupled to the transceiver 304. That the network access node 300 is configured to perform certain actions can in this disclosure be understood to mean that the network access node 300 comprises suitable means, such as e.g. the processor 302 and the transceiver 304, configured to perform said actions.

According to embodiments of the invention the network access node 300 is configured to receive a first control message 502 from a client device 100. The first control message 502 indicates an initial traffic information for a data packet session associated with the client device 100. Based on the initial traffic information for the data packet session, the network access node 300 is configured to determine a first time window for a first moving average for the data packet session and a second time window for a second moving average for the data packet session. The network access node 300 is further configured to transmit a second control message 504 to the client device 100. The second control message 504 indicates the first time window for the first moving average for the data packet session and the second time window for the second moving average for the data packet session.

Fig. 4 shows a flow chart of a corresponding method 400 which may be executed in a network access node 300, such as the one shown in Fig. 3. The method 400 comprises receiving 402 a first control message 502 from a client device 100, wherein the first control message 502 indicates an initial traffic information for a data packet session associated with the client device 100. The method 400 further comprises determining 404 a first time window for a first moving average for the data packet session and a second time window for a second moving average for the data packet session based on the initial traffic information for the data packet session. Furthermore, the method 400 comprises transmitting 406 a second control message 504 to the client device 100, wherein the second control message 504 indicates the first time window for the first moving average for the data packet session and the second time window for the second moving average for the data packet session.

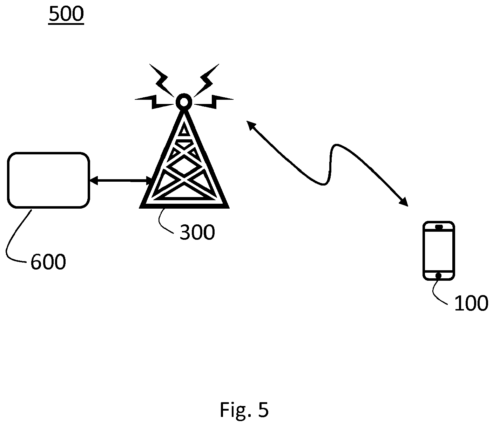

Fig. 5 shows a wireless communication system 500 according to an embodiment of the invention. The wireless communication system 500 comprises a client device 100 and a network access node 300 configured to operate in the wireless communication system 500. For simplicity, the wireless communication system 500 shown in Fig. 5 only comprises one client device 100 and one network access node 300. However, the wireless communication system 500 may comprise any number of client devices 100 and any number of network access nodes 300 without deviating from the scope of the invention. In the wireless communication system 500, a data packet session is established between the client device 100 and a data network 600 via the network access node 300.

Fig. 6 shows signalling between a client device 100 and a network access node 300 according to embodiments of the invention so as to provide even deeper understanding of the invention.

In step I in Fig. 6, the client device 100 determines an initial traffic information for a data packet session associated with the client device 100. Step I may be performed upon establishment of the data packet session with a data network 600. For example, upon establishment of a new data session and reception of initial data packets from an application layer of the client device 100. However, step I may further be performed for an already established data packet session with the data network 600, e.g. if the traffic information changes during an established session.

The client device 100 may determine the initial traffic information based on initial actual data and/or computed statistical data related to data packet size and inter-arrival data packet times. For example, upon establishment of the data packet session with the data network 600 the client device 100 may receive initial data packets from an application layer and store initial actual data on data packet time arrivals and sizes for a subsequent number of packets. Based on the stored initial actual data on data packet time arrivals and sizes for a subsequent number of packets, the client device 100 may determine statistical data such as e.g. data packet size distribution and an inter-arrival data packet time distribution. In embodiments the determination of the initial traffic information for the data packet session may hence comprise the client device 100 determining a data packet size distribution of the data packet session and an inter-arrival data packet time distribution of the data packet session.

As shown in Fig. 6, the client device 100 transmits a first control message 502 to the network access node 300. The first control message 502 indicates the initial traffic information for the data packet session associated with the client device 100 and hence informs the network access node 300 about the determined initial traffic information.

The network access node 300 receives the first control message 502 indicating the initial traffic information for the data packet session from the client device 100. Based on the initial traffic information for the data packet session, the network access node 300 determines a first time window for a first moving average for the data packet session and a second time window for a second moving average for the data packet session in step II in Fig. 6.

The first moving average may be a first moving average throughput which determines the throughput over the first window size. In a similar way, the second moving average may be a second moving average throughput which determines the throughput over the second window size. The first moving average may be a fast moving average and the second moving average may be a slow moving average. For example, at a scheduling interval of 10ms, the first time window for the first moving average may be in the order of 50ms, and the second time window for the second moving average may be in the order of 200ms.

Furthermore, the first moving average may be a first moving average data rate and the second moving average may be a second moving average data rate. Gradient of moving average which indicates the acceleration and retardation of the throughput computed. Similarly, to the two different moving averages, two different gradients may be defined: (a) the gradient of fast moving average, $\nabla F_{ma}$, and (b) the gradient of the slow moving average, $\nabla S_{ma}$. Ratio of the integrals of moving averages which is used to compare the integrals of fast and slow moving averages for a time period corresponding to a number of $n$ transmission time intervals (TTIs). This ratio indicates different types of buffer build-ups and depletions that can be used as partial conditions to take scheduling strategy decisions on. As above the two moving average intervals used in the computation of the ratio over $n$ TTIs are: (a) the integral of fast moving average, $\mu_f = \sum_{k=-n}^{0} F_{ma}$ and (b) the integral of the slow moving average $\mu_s = \sum_{k=-n}^{0} S_{ma}$.

In embodiments where the initial traffic information for the data packet session comprises the data packet size distribution of the data packet session and the inter-arrival data packet time distribution of the data packet session, the network access node 300 may determine the first time window for the first moving average based on the data packet size distribution of the data packet session and the inter-arrival data packet time distribution of the data packet session. For example, a high variation or randomness in the data packet size distribution and/or inter-arrival data packet time distribution of the traffic, indicating bursty traffic, may result in smaller window sizes for the first time window and the second time window than traffic with lower variation or randomness in the data packet size distribution and/or inter-arrival data packet time distribution.

According to embodiments of the invention the second time window for the second moving average may be derived from first time window for the first moving average. In this case, the network access node 300 may determine a scalar factor based on the data packet size distribution of the data packet session and the inter-arrival data packet time distribution of the data packet session. The network access node 300 may further determine the second time window for the second moving average equal to a product of the first time window for the first moving average multiplied with the scalar factor. The higher the variation or randomness of the data packet size distribution and inter-arrival data packet time distribution the higher the scalar factor. A higher scalar factor implies a larger second time window and consequently a greater filtering of excessive rate values and variations.

The network access node 300 indicates the determined first time window for the first moving average and the second time window for the second moving average to the client device 100 in a second control message 504. In other words, the network access node 300 transmits a second control message 504 to the client device 100, as shown in Fig. 6. The second control message 504 indicates the first time window for the first moving average for the data packet session and the second time window for the second moving average for the data packet session.

The client device 100 receives the second control message 504 from the network access node 300 and hence the first time window for the first moving average for the data packet session and the second time window for the second moving average for the data packet session. The second control message 504 is received in response to the transmission of the first control message 502. As described above, the second time window for the second moving average may be equal to a product of the first time window for the first moving average multiplied with a scalar factor.

Based on the received first time window for the first moving average for the data packet session and the received second time window for the second moving average for the data packet session, the client device 100 in step III in Fig.

6 determines an additional traffic information for the data packet session. The determination of the additional traffic information for the data packet session may comprise continuously determine a first moving average value of the data packet session based on the first time window for the first moving average and continuously determine a second moving average of the data packet session based on the second time window for the second moving average. Thus, the additional traffic information for the data packet session may comprise the first moving average value of the data packet session and the second moving average value of the data packet session. The first moving average value may be a first moving average throughput value or a first moving average data rate value, and the second moving average value may be a second moving average throughput value or a second moving average data rate value.

According to embodiments of invention the network access node 300 may indicate additional information in the second control message 504 to the client device 100, e.g. a step size, a reporting interval, a computation interval, and a reporting indicator. The step size defines the steps size for computing the moving average values in the client device 100. The reporting interval defines the reporting interval. The computation interval defines the computation interval, and e.g. be expressed in terms of time, number of TTIs or number of TCIs. The reporting indicator defines the presence and configuration of over-allocation indication, which corresponds to a computation of the over-allocation, and buffer status indicator, which corresponds to the buffer depth.

The client device 100 may use the addition information received from the network access node 300 when determining an additional traffic information for the data packet session. For example as mentioned, the second control message 504 may indicate a step size for the determination of the first moving average value and the second moving average value. In this case, the client device 100 may continuously determine the first moving average value of the data packet session based on the first time window for the first moving average and according to the step size. The client device 100 may further continuously determine the second moving average of the data packet session based on the second time window for the second moving average and according to the step size. The step size can continuously be updated by means of new second control messages from the network access node 300 indicating updated/new step size values.

The additional traffic information determined by the client device 100 is indicated to the network access node 300 in a third control message 506. Hence, the client device 100 transmit a third control message 506 indicating the additional traffic information for the data packet session to the network access node 300, as shown in Fig. 6.

The network access node 300 receives the third control message 506 from the client device 100 and hence the additional traffic information for the data packet session. The third control message 506 is received in response to the transmission of the second control message 504. As described above, the additional traffic information for the data packet session may comprise the first moving average value of the data packet session and the second moving average of the data packet session. Based on the first moving average value of the data packet session and the second moving average of the data packet session, the network access node 300 determines a scheduling mode for the data packet session in step IV in Fig. 6. The scheduling mode may e.g. comprise a scheduled data packet volume, a scheduling time period, a scheduling start time instance, and a data packet transmission spreading pattern. Furthermore, the network access node 300 may determine the scheduling mode based on a comparison of the additional traffic information with one or more threshold values which will be explained more in the following disclosure.

In embodiments where the scheduling mode comprises a scheduled data packet volume, the network access node 300 may derive the scheduled data packet volume based on a determination of the data packet flow rate, a determination of the data packet flow acceleration, and a determination of the buffer state for the scheduling period. In embodiments of the invention:

- The determination of the data packet flow rate may be based on the first moving average value of the data packet session, the second moving average value of the data packet session, a compensation factor and a weighing factor;
- The determination of the data packet flow acceleration may be based on the mathematical derivative of the first moving average value of the data packet session, the mathematical derivative of the second moving average value of the data packet session, a compensation factor and a weighing factor; and
- The determination of the buffer state for the scheduling period may be based on an indicated buffer state of the data packet session.

The compensation factor used to determine the data packet flow rate and the data packet flow acceleration may be determined based on an over-allocated data packet volume. The weighing factor used to determine the data packet flow rate and the data packet flow acceleration may be determined based on one or more threshold values which may be:

- A rising slope threshold, defining the lowest value for the ratio of the first moving average value of the data packet session and the second moving average value of the data packet session;
- A falling slope threshold, defining the highest value for the ratio of the first moving average value of the data packet session and the second moving average value of the data packet session;

- A no slope threshold, defining the interval between the lowest and the highest value for the ratio of the first moving average value of the data packet session and the second moving average value of the data packet session;
- A first moving average threshold, defining the lowest absolute value of the first moving average value of the data packet session;
- A second moving average threshold, defining the lowest absolute value of the second moving average value of the data packet session;
- A first gradient moving average threshold, defining the interval of the lowest value and the highest value of the ratio of the first mathematical derivative of the first moving average value of the data packet session and the first moving average value of the data packet session;
- A second gradient moving average threshold, defining the interval of the lowest value and the highest value of the ratio of the second mathematical derivative of the second moving average value of the data packet session and the second moving average value of the data packet session.

In embodiments where the scheduling mode comprises a scheduling time period, the network access node 300 may determine the scheduling period for the data packet session based on an over-allocated data packet volume.

In embodiments where the scheduling mode comprises a data packet transmission spreading pattern, the network access node 300 may determine the data packet transmission spreading pattern for the data packet session based on the initial traffic information, the scheduled data packet volume, the scheduling period, and the scheduling start time instance.

The network access node 300 further transmits a fourth control message 508 to the client device 100, as shown in Fig. 6. The fourth control message 508 indicates the determined scheduling mode for the data packet session. When the client device 100 receives the fourth control message 508 indicating the scheduling mode for the data packet session from the network access node 300, the client device 100 schedules data packets of the data packet session based on the scheduling mode.

According to embodiments of the invention the fourth control message 508 may further comprise an over-allocation report instruction. The client device 100 may in this case determine an over-allocated data packet volume for the scheduled data packet of the data packet session in step V in Fig. 6 and transmit a fifth control message 510 indicating the over-allocated data packet volume to the network access node 300, as shown in Fig. 6. The network access node 300 receives the fifth control message 510 indicating the over-allocated data packet volume for the data packet session from the client device 100. Based on the over-allocated data packet volume for the data packet session the network access node 300 determines an updated scheduling mode for the client device 100 in step VI. The determined updated scheduling mode is transmitted to the client device 100 in an updated fourth control message 508'. Hence, the network access node 300 transmit an updated fourth control message 508' to the client device 100, where the updated fourth control message 508 indicates the updated scheduling mode.

Furthermore, the fourth control message 508 may in embodiments comprise a buffer state report instruction. The client device 100 may in this case determine a buffer state for the data packet session and transmit a sixth control message 512 (not shown in Fig. 6) indicating the buffer state of the data packet session to the network access node 300. The sixth control message 512 may be a separate control message or may be an extension of the fifth control message 510 such that the fifth control message 510 indicates both the over-allocated data packet volume and the buffer state to the network access node 300.

The network access node 300 may use the buffer state received in the sixth control message 512 from the client device 100 as further input when determining the scheduling mode for the client device 100.

Further details related to the determination of traffic information and time window sizes will now be described with reference to two different traffic types, i.e. video streaming and web browsing.

For video streaming, dynamic adaptive streaming over HTTP (DASH) is the dominant video streaming protocol on the internet. DASH media is structured into segments, where each segment is conveyed in one selected bitrate, based on the link conditions between a client and a server. To assure smooth playback, all video streaming sessions begins with an initial buffering period, whereby multiple segments are downloaded without any reading time in between. The resulting lag can be between a few seconds for (near) real time streaming up to 60 seconds for longer video sessions like movies or TV series. Packet statistics for DASH indicates that the vast majority of data packets in a session uses the maximum ethernet frame size. The inter-arrival data packet time to a large extent follow a normal distribution, with some minor exponential ingredients. This results in a relatively stable incoming throughput, and the segment sizes are typically normally distributed as long as the channel quality stays the same.

Web browsing is not as data intensive as DASH but generates more individual sessions in a sense that no directly distinctive pattern can be identified. Data packet statistics for web traffic exhibits more randomness. The data packets tend to be almost evenly distributed between small and large data packets, and with a Pareto distributed inter-arrival data packet time.

Efficient proactive scheduling of traffic may be performed based on knowledge of (i) the average throughput in a burst, $T_b$ (ii) inter-arrival data packet time $t_{pi}$, (iii) reading time between bursts $t_r$, and (iv) the size of each data packet in bits, $P_i$. A burst is defined as the time $t_b$ between the first arrived data packet in the burst and the last arrived data packet in the burst. With regards to data packet and burst inter-arrival time, traffic profiling determines the start and end of $t_b$ and consequently the start and end of $t_r$. Typically, in bursty traffic both burst length ($t_b$) and burst interarrival time ($t_r$) are significantly longer than data packet inter-arrival.

The above parameters, which can be computed from the data packet arrivals into the buffer, can be complemented with QoS parameters conveyed to the network access node 300 as part of flow establishment. The QoS demands are negotiated between the client device 100 and the network as part of non-accesses stratum (NAS) procedures.

As described above DASH traffic typically results in a relatively stable incoming throughput, and the segment sizes are typically normally distributed as long as the channel quality stays the same. Due to this, it is feasible to predict the burst data rate of flows conveying DASH payload with sufficient accuracy. Thereby, the amount of data to schedule ahead of time may be predicted. On the other hand, web browsing is not as data intensive as DASH, but generates more individual sessions. Packet statistics for web traffic exhibits more randomness. The resulting throughput exhibits significant random bursts, making it more difficult to predict the amount of data to schedule ahead of time. Hence, the advantageous window size configuration is slightly different for DASH vs. web browsing. Multiple data services are many times mixed on the same flow using the same QoS, making it difficult to optimize the configuration for a specific type of service. However, the window sizes may be determined by exploiting the tradeoff between accuracy and latency. For example, in the case of a traffic mix dominated by web browsing, proactive scheduling accuracy is implemented when the size of the slow and fast windows differs significantly. Furthermore, adaptive configuration settings per flow may be used depending on a slow evaluation of data packet size distribution and inter-arrival data packet time distribution, resulting in a configuration setting opted for the most dominant service over the evaluation interval.

To provide even deeper understanding of the invention and to give alternative implementation examples of the invention further embodiments of the invention will be explained in a 5G NR context with its terminology and system architecture in the following disclosure. This means e.g. that the client device 100 can be understood as a UE, the network access node 300 as a gNB in NR, and the data packet sessions as a data flow. Moreover, in further embodiments a resource allocation controller (RAC) and a traffic profiler (TP) is introduced for providing the functions which previously have been described related to the client device 100 and the network access node 300 herein. The TP is located in the network. For the downlink (DL) the RAC is located in the network. For the uplink (UL) some functions of the RAC is located in the network, such as user scheduling, and some other functions are located in the UE.

Therefore, the determination of the scheduling mode will now be described for an embodiment where a resource allocation controller (RAC) performs scheduling of data transmission for users and a traffic profiler (TP) determines the traffic state and the corresponding proactive scheduling configuration. RAC communicates traffic arrival information for all flows to the TP. The TP determines and sends the configuration of TP indicators (TPI) that RAC should continuously report. Upon reporting by the RAC, the TP determines the traffic state of that user and the proactive scheduling (PS) configuration for a certain transmission scheduling interval. The PS configuration is signalled to RAC which schedules and transmits the user packets accordingly. Depending on the type of traffic/service the transmission scheduling interval may span over multiple subframes. In addition, the RAC feeds back the TP on the deficit of the resource allocation decisions. The TP readjusts the TPI and PS configurations accordingly.

For the characterization of the incoming traffic the TP uses a state based method where each state corresponds to a scheduling mode of resource allocation. State transitions can be made based on evaluating a set of key conditions defined as arithmetical and/or Boolean functions associated with the TPIs. Three states may be defined, each representing a recommended scheduling mode, based on an evaluation of TPIs:

- Dynamic Scheduling (DS) state, which refers to the resource allocation of a user's traffic over frequency, sequence codes and space for a single determined TTI (typically next TTI instance);
- Burst Scheduling (BS) state is similar to the DS with the extension that it refers to the resource allocation of a user's traffic for a single determined interval of multiple TTIs;
- Cyclic Burst scheduling (CBS) state extends the BS to refer to the resource allocation of a user's traffic for multiple subsequent intervals of multiple TTIs.

It has to be noted that SPS, which typically refers to the resource allocation of a user's traffic for multiple subsequent intervals of single TTIs.

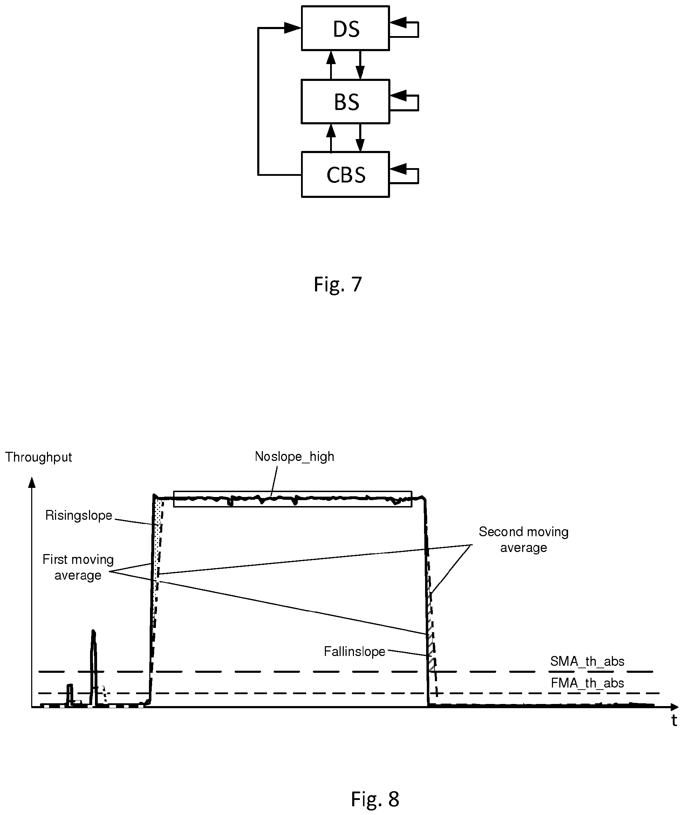

Fig. 7 shows the states and the state transmission of the scheduling modes describe above. The conditions for the state transitions are based on traffic predictions as a function of the defined TPIs and other traffic parameters and their corresponding threshold values. Dynamic scheduling may be used when predictions are missing or for very short-term predictions, i.e. next TTI, burst scheduling may be used for short- to medium-term predictions, i.e. next radio frame, while cyclic burst scheduling and semi-persistent scheduling may be used for long-term predictions, i.e. next sequence of radio frames. In particular the traffic predictions are based on (i) the slow and fast moving averages at the time of prediction, (ii) the gradients of the two moving averages, (iii) the ratio of the integrals of the moving averages, (iv) the number of transmission intervals, and (v) the current buffer depth in bits. In addition, the following threshold values are considered, (vi) the absolute threshold values of the slow and fast moving averages, (vii) the rising slope minimum threshold, (viii) the no slope high valued minimum and maximum thresholds, and (ix) the falling slope maximum threshold.

When a UE establishes a data session and is granted access for transmission, the TP defaults to state DS. The conditions to make state changes are based on a set of conditions as defined in the table 1 below:

Table 1: Conditions for scheduling state changes

| State Change | Condition |
|---|---|
| DS → BS | (risingslope & SMA_th_abs) OR (SMA_th_abs & FMA_th_abs) |
| BS → CBS | noslope_high & SMA_th_abs & SMA_th_nograd |
| CBS → BS | fallingslope & !SMA_th_nograd |
| CBS → DS | buffer_empty |
| BS --> DS | (Fallingslope & !FMA_th_abs) OR (!FMA_th_abs & !SMA_th_abs) OR buffer_empty |

The conditions which in one embodiment are specified as Boolean are defined in Table 2 and illustrated in Fig. 8. Furthermore, Fig. 8 illustrates the different scheduling states and state changes in relation to the average throughput values over time associated with the fast and slow moving averages in a DASH-traffic scenario. It also depicts the absolute threshold values of the slow and fast moving averages.

Table 2: Condition definitions based on threshold values as determined by the traffic profiler

| Boolean variable | Condition specification | Example embodiment |
|---|---|---|
| FMA_th_abs | Absolute threshold for $F_{ma}$ (boolean condition $F_{ma} > F_{ma\_th}$) | $F_{ma\_th}$ = 15000 [b/ms] |
| SMA_th_abs | Absolute threshold for $S_{ma}$ (boolean condition $S_{ma} > Sma\_th$) | $S_{ma\_th}$ = 5000 [b/ms] |
| Risingslope | Rising slope threshold (boolean condition $\mu_f / \mu_s \geq \rho_{min\_th}$) | $\rho_{min\_th}$ = 1.2 |
| Noslope_high | No slope threshold (boolean condition $v_{max\_th} > \mu_f / \mu_s > v_{min\_th}$) | $v_{min\_th}$ = 0.8, $v_{max\_th}$ = 1.2 |
| Fallingslope | Falling slope threshold (boolean condition $\mu_f / \mu_s \leq \varphi_{max\_th}$) | $\varphi_{max\_th}$ = 0.8 |
| Nogradient_fast | Normalized gradient threshold ($\eta_{max\_sth} > \nabla F_{ma}/F_{ma} > \eta_{min\_sth}$) | $\eta_{min\_sth}$=-0,05, $\eta_{max\_sth}$=0,05 |
| Nogradient_slow | Normalized gradient threshold ($\eta_{max\_sth} > \nabla S_{ma}/S_{ma} > \eta_{min\_sth}$) | $\eta_{min\_sth}$=-0,05, $\eta_{max\_sth}$=0,05 |

The conditions in Table 2 constitute an example embodiment and are by no means exhaustive. Furthermore, it is possible that the intervals $[\eta_{min\_sth}, \eta_{max\_sth}]$ and $[\eta_{min\_fth}, \eta_{max\_fth}]$ may be different for the Nogradient_slow and Nogradient_fast, respectively.

Traffic prediction is based on (i) the moving averages $F_{ma}$ and $S_{ma}$ at the time of prediction, (ii) the gradients of the moving averages $\nabla F_{ma}$ and $\nabla S_{ma}$, (iii) the number of transmission intervals, and (iv) the current buffer state. The proactively scheduled total data volume is given by:

$$P_{tot} = t_{pw} * (R_{\mathrm{w}} + \frac{t_p}{2} * A_{\mathrm{w}}) + \widehat{D}_{\mathrm{buf}}, \tag{1}$$

where

- $R_w$ is the proactive rate prediction,
- $A_w$ is the proactive rate acceleration prediction,
- $t_{pw}$ is in essence the prediction time, which is defined as the time from next radio frame start ($t_{fs}$) until data must be available for the last scheduling occurrence,
- $\hat{D}_{buf}$ is the estimated buffer state at the start of next radio frame ($t_{fs}$).

To achieve a tradeoff between robustness and agility, the rate- and acceleration predictions are weighted and compensated as follows:

$$R_w = C_{oa} * \left(G_{fast} * F_{ma} + \left(1 - G_{fast}\right) * S_{ma}\right) \tag{2}$$

$$A_w = C_{oa} * \left(G_{fast} * \nabla F_{ma} + \left(1 - G_{fast}\right) * \nabla S_{ma}\right) \tag{3}$$

where $G_{fast}$ is a weighting factor between predictions based on $F_{ma}$ and $S_{ma}$. The value of $G_{fast}$ depends on the slope condition used in the state model and is given by

$$G_{fast} = \begin{cases} w_r, if\ Rising slope \\ w_f, if\ Falling slope \\ w_n, if\ Noslope\_high \end{cases} \tag{4}$$

In one example embodiment these values are given by $w_r$ = 0.3, $w_f$ = 0.8 and $w_n$ = 0.1. The $G_{fast}$ values are selected to avoid excessive over-allocations in case of intensive traffic bursts, hence a bit slow at the start of a burst, but faster to react on the end of bursts. $G_{fast}$ may be optimized for different traffic types, if conveyed over separate flows, e.g., services using different QoS markers can be configured with different parameters in this respect. More specifically, the $G_{fast}$ may be determined as a function of the window size, which in one example implementation can be expressed as a linear function of the window size.

$C_{oa}$ is a compensation factor to attempt to mitigate excessive over-allocation. Over-allocation $A_{oa}$, is monitored continuously in the system, on a per scheduling decision basis. The operational range for $C_{oa}$ can be configured in the system. In one example configuration the compensation factor can be conditioned to the level of over-allocation $A_{oa}$ by means of adjusting steps within a certain range.

$$C_{oa} = \begin{cases} min: 0.8, max: 1.0 \\ C_{oa} - 0.02, if\ A_{oa} > 5\% \\ C_{oa} + 0.02, if\ A_{oa} = 0\% \end{cases} \tag{5}$$

$t_{pw}$ denotes the proactive scheduling time and is defined as the time from next radio frame start ($t_{fs}$) until data must be available for the last scheduling occurrence

$$t_{pw} = t_{ftti} + (N_c - 1) * t_{rf} \tag{6}$$

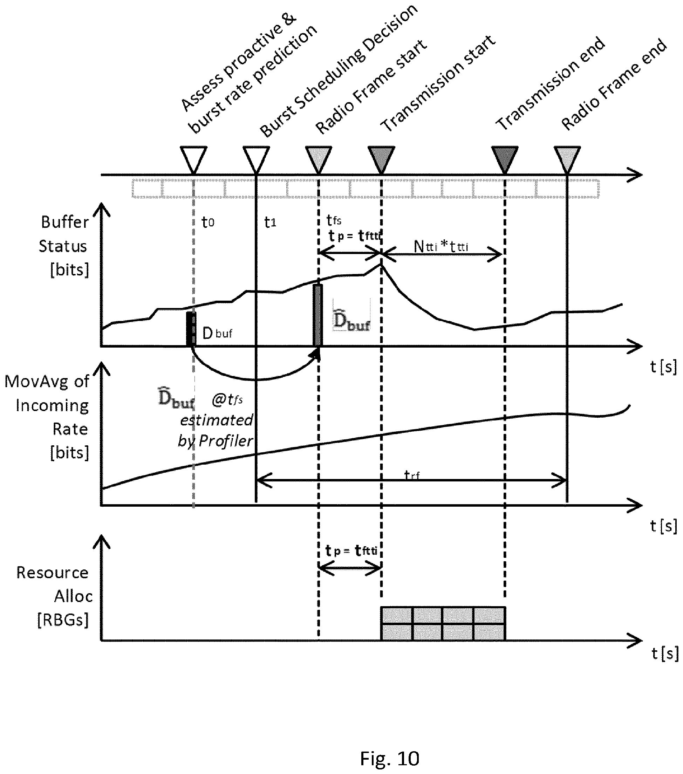

where $N_c$ is the number of cycles determined for cyclic burst scheduling. In the case of Burst scheduling, $N_c$ = 1, i.e., $t_{pw} = t_{ftti}$. $t_{rf}$ is the length of a radio frame which corresponds to 10ms in LTE and NR. Fig. 10 illustrates the time indicators pertinent to the burst scheduling mode for the computation of the proactively scheduled data volume.

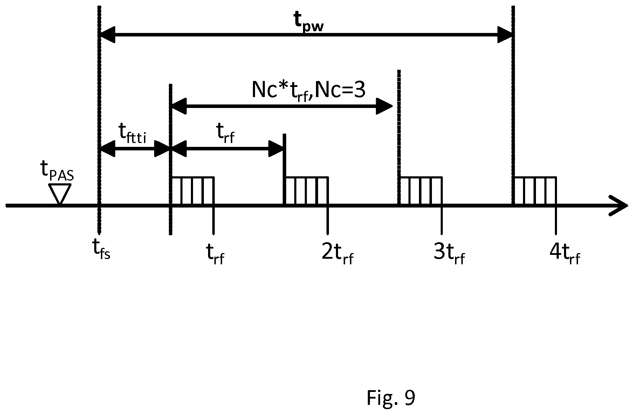

Fig. 9 shows the case when $N_c$ > 1. For burst scheduling there is only one burst transmission to schedule, whereas for cyclic burst scheduling the resulting scheduling size is computed for multiple transmission intervals. $t_{pas}$ is the time when a proactive scheduling decision is taken. This is always ahead of $t_{fs}$, but as a consequence of the scheduling process being sequential in nature and predominantly performed in user/flow priority order, there is only a hard deadline when all scheduling decisions must be taken which is constrained by the hardware (HW) platform capabilities and processing of other prioritized tasks. Because the TP neither knows the channel conditions ahead, nor the exact subframe allocation within the radio frame, $t_{pw}$ is up to the scheduler to decide.

In an embodiment TP provides the proactive rate prediction $R_w$, the proactive rate acceleration prediction $A_w$, the number of cycles $N_c$, and optionally the estimated buffer state at the start of next radio frame ($t_{fs}$) $\hat{D}_{buf}$, while the RAC computes a user's proactively scheduled data volume based on Eq. (1) and the corresponding proactive scheduling time $t_{pw}$ that is computed from next radio frame start ($t_{fs}$), as shown in Fig.10, the number of cycles $N_c$ until the last actual scheduling occurrence. The advantage of this is that it allows RAC the flexibility to compute the proactive data volume by first determining the actual user scheduling time, at the expense that proactive scheduling decision logic is possessed by RAC or provided by the TP to RAC.

In an embodiment the TP may provide to the RAC a non-empty set of *K* alternative proactively scheduled data

volumes $\boldsymbol{P_{tot}} = (P_{tot}^{(1)}, P_{tot}^{(2)}, ..., P_{tot}^{(K)})$ and their associated proactive scheduling times $\boldsymbol{t_{pw}} = (t_{pw}^{(1)}, t_{pw}^{(2)}, ..., t_{pw}^{(K)})$ also indicating the start of next radio frame ($t_{fs}$) as shown in Fig.10. At scheduling decision RAC may select the scheduled data volume with the proactive scheduling time matching the actual scheduling time as determined by RAC. The decision about the actual scheduling time depends among others by the radio channel conditions of the user and the scheduling fairness between the user and other scheduled users. The advantage of this is that it does not require any proactive scheduling decision logic in RAC, and while it allows the same flexibility as the previous embodiment it slightly increases the amount of data to be exchanged as part of the PS configuration message.

In a yet another embodiment the TP may provide an explicit scheduling scheme to the RAC represented by a non-empty set of $N_c$ alternative proactively scheduled data volume vectors each cycle of the CBS corresponding to a proactive scheduling decision recommendation.

As shown in Fig. 9, the number of cycles $N_c$ to schedule for CBS depends on both state transitions and outcome of previous CBS decisions. In one example embodiment $N_C$ is conditioned to the level of over-allocation $A_{oa}$ by means of increments within a certain range, and given by

$$N_C = \begin{cases} min: 2 \quad max: 20 \quad default: 2 \\ N_C + 1, \quad if \quad A_{oa} \leq 0.2\% \\ N_C \quad if \quad 0.2\% < A_{oa} \leq 2\% \\ N_C - 1 \quad if \quad 2\% < A_{oa} \leq 10\% \\ N_C - 2 \quad if \quad A_{oa} > 10\% \\ N_C = min \quad if \quad State: BS \rightarrow CBS \end{cases} \tag{7}$$

where $A_{oa}$, is the over-allocation indicator that is monitored continuously by the RAC and provided to TP via the PS status information message. In one example embodiment the $A_{oa}$, is defined by the portion of the number of bits that have been unsuccessfully predicted to be scheduled over the total amount of bits that have been predicted. Here, unsuccessfully predicted refers to the deficit between the number of bits expected to be in a user's buffer and the actual number of bits in the buffer at scheduled time. The PS status information message may also include the buffer state $D_{buf}$ after the execution of the proactive scheduling decision. This would allow TP for a better buffer state estimate i.e., an estimate of the buffer status $\hat{D}_{buf}$, as shown in Fig.10. However, a (re)-evaluation may be performed every 10ms for adjustment purposes.

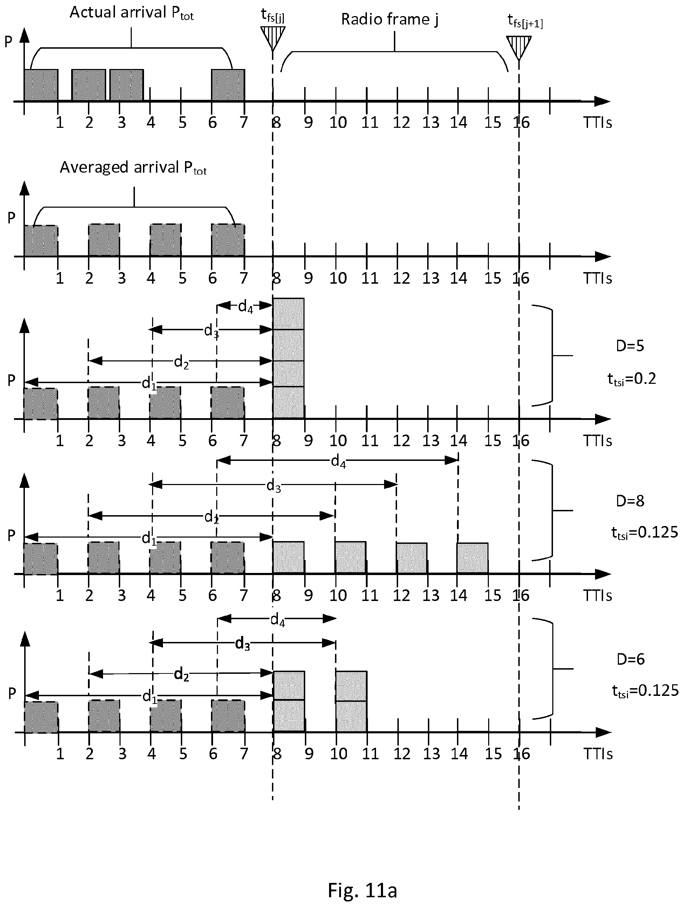

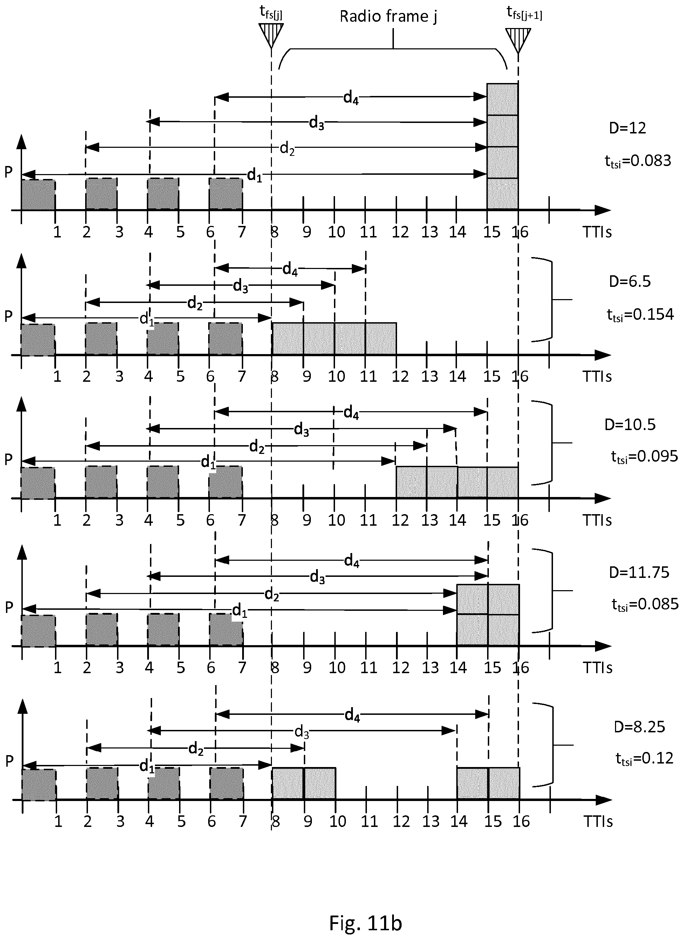

Figure 11 illustrates different TTI determinations and resource allocation block groups for proactive scheduling corresponding to different values of the average delay and time spreading indicator. The TTI determination may be a function of the traffic delay and other QoS demands communicated to TP by RAC. In an embodiment the number of TTIs may be determined based on the traffic delay and the proactively scheduled data volume in terms of the proactive scheduling time spreading indicator as described below and depicted in Fig. 11. The proactive scheduling time spreading indicator (TSI), $t_{tsi}$ defines a unique TTI scheduling pattern given by

$$t_{tsi} = \frac{r}{\sum_{n=1}^{r} \hat{d}_n}. \tag{8}$$

In Eq. (8), $r$ is the number of resource blocks (RB) or RB groups (RBG) of size $L_r$ with $P_{tsi} = r*L_r$ and $\hat{d}_n$ defines the delay estimation from the beginning of the radio frame $t_{fs}$ to the scheduling time for transmission $t_{st}$ of the $n$th RBG. $P_{tsi}$ denotes the data volume to be scheduled in the actual radio frame which, in an example embodiment, is given by $P_{tsi} = P_{tot}/N_c$. In addition, the denominator $D = \frac{1}{r}\sum_{n=1}^{r} \hat{d}_n$ corresponds to the average delay of the proactively scheduled data volume. The number of TTIs, each with a duration time of $t_{tti}$ seconds, can be derived as a mapping of the $t_{tsi}$ or $D$. The average delay $\hat{d}_n$ and the data arrivals are computed based on the average rate of the proactively scheduled data volume from the time when the first packet or RBG data arrived until the time when the last packet or RBG data arrived, as shown in Fig. 11a. Fig. 11b further shows different values of the average delay and time spreading indicator $t_{tsi}$ each corresponding to a different TTI scheduling pattern. Generally, the TTI scheduling pattern is determined based on $D$ or an equivalent delay deviation measure.

In a further embodiment the TP may provide a non-empty set of time spreading indicators $\{t_{tsi}^{(1)}, t_{tsi}^{(2)}, ..., t_{tsi}^{(\Lambda)}\}$ or proactive schedule delays $\{D^{(1)}, D^{(2)}, ..., D^{(\Lambda)}\}$ allowing the RAC to select based on radio channel state and user fairness conditions. In the embodiment the TP sends the maximum time spreading indicator $t_{tsi}$ and/or the maximum average proactive schedule delays $D$. Furthermore, in an extension of the embodiment the TP may provide a vector of time spreading indicators $\left\{t_{tsi}^{(1)}, t_{tsi}^{(2)}, \dots, t_{tsi}^{(N_c)}\right\}$ or proactive schedule delays $\{D^{(1)}, D^{(2)},\dots,D^{(N_c)}\}$ of size $N_c$ for the $N_c$ subsequent proactive scheduling cycles.

In an alternative embodiment the number of TTIs/radio frame is just configurable, i.e. a semi-static configuration of m groups of TTIs in a radio frame, where $t_{rf}/(2*t_{tti}) \geq m \geq 1$.

As previously mentioned, the window sizes characterizing the fast and the slow moving averages are determined and configured by the TP in these embodiments. The configuration is communicated to the RAC. The TP may determine the scheduling decision window. In addition to the scheduler configuration parameters the following scheduling mode related configuration is sent to RAC by the TP:

(i) A User flow ID indicator $I_{uef}$ which is an identifier of the user flow,
(ii) A proactive scheduler indicator $I_{ps}$ indicating whether the dynamic or the proactive scheduler should be invoked,
(iii) In case of proactive scheduling indication the configuration also comprises the proactive scheduling decisions including:

a. The proactive data volume to be scheduled $P_{tot}$,
b. A time indicator $I_{rf}$ corresponding to the index of the next radio frame $t_{fs}$ and indicates the start time in terms of the radio frame ID, as shown in Fig.10,
c. The proactive scheduling time $t_{pw}$ (alternatively the next radio frame, the last scheduling occurrence time and the number of cycles/radio frames $N_c$), as shown in Fig.9,
d. An indication of the number of cycles/radio frames $N_c$, as shown in Fig.9,
e. The indicators to be monitored and reported for progress and indicator monitoring,
f. The number of TTIs per proactive scheduling decision or cycle alternatively the TTI instances,
g. The time spreading indicator alternatively the average delay and $D$ which exactly indicates the time instance, TTIs, when to schedule.

In another embodiment of proactive scheduling indication the configuration alternatively comprises the proactive scheduling decisions including:

h. The proactive rate prediction $R_w$,
i. The proactive rate acceleration prediction $A_w$,
j. Estimated buffer state, $\hat{D}_{buf}$, as shown in Fig.10,
k. An indication of the proactively scheduled data volume computation i.e., Eq. (1).

It has to be noted that the identifier of the user flow may be a DRB ID, flow ID or UE ID, while the indication of the next radio frame $t_{fs}$, as shown in Fig.10, may correspond to RFN (Radio Frame Number) as in the 3GPP standard.

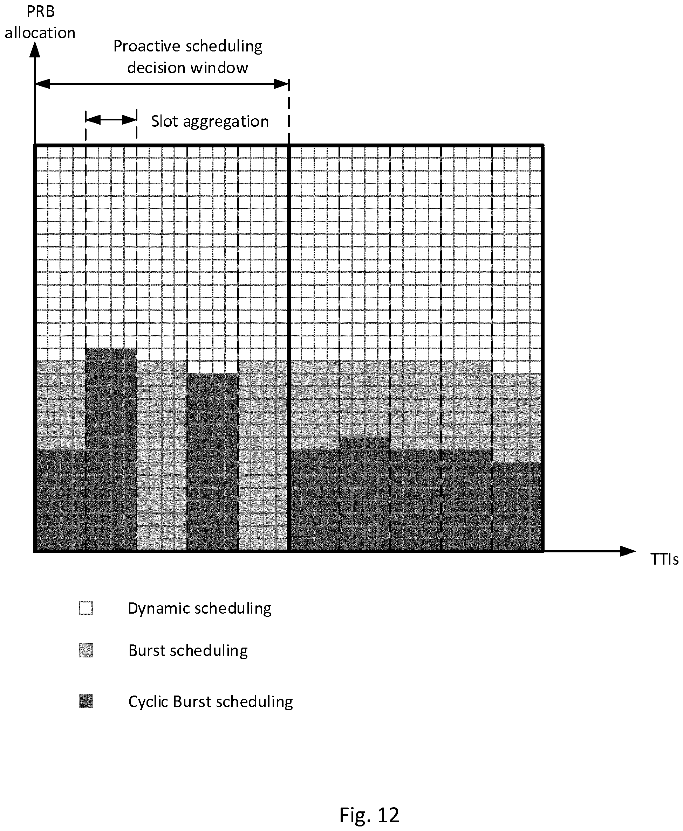

When implemented, the result of the TP will divide the frequency- and time dimensions of a radio frame in resource reservation groups, accommodating user traffic in different scheduling state. The scheduling modes may be multiplexed in frequency, time or a mix of these as indicated in Fig. 12, where for simplification a semi static definition of slot aggregations of 4 slots are used in the time domain. Fig. 12 shows an example outcome of the proactive scheduling over two decision windows overtime. This example illustrates a division of Physical resource block (PRB) allocations over multiple TTIs and client devices across the different scheduling modes of dynamic, burst and cyclic burst scheduling modes.

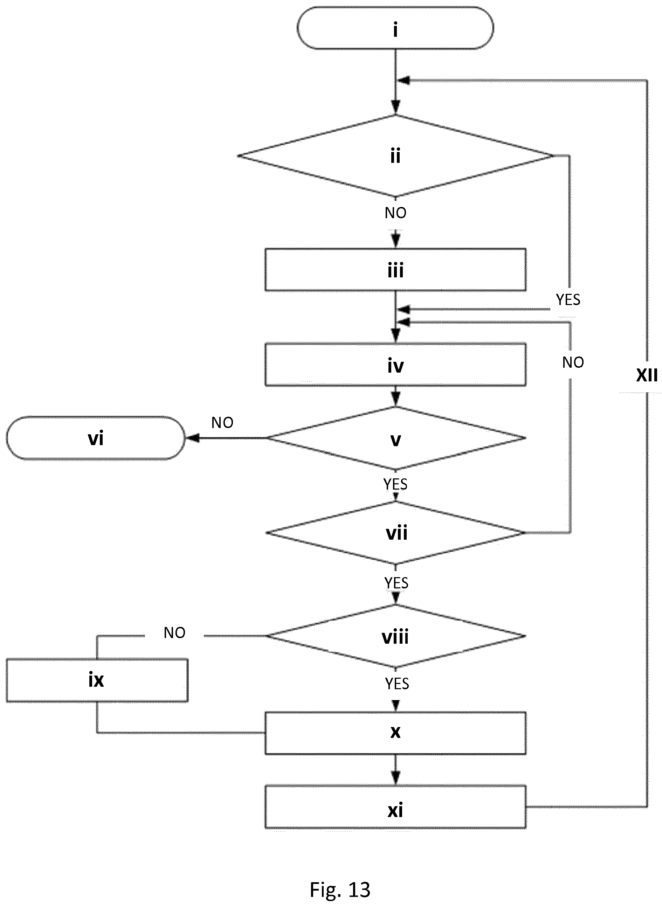

To accommodate a system where profiling is done, the traffic prediction algorithm computation is decomposed into a set of steps, as shown in Fig.13.

At i) upon the addition of a new data packet session, the client device 100 sends a new first control message 502 to the network access node 300, wherein the first control message 502 indicates an initial traffic information for the data packet session. At ii) based on the content of the first control message 502 the network access node 300 checks if an adequate a first time window for the first moving average and a second time window for a second moving average for the data packet session exist. At iii) if the first time window for the first moving average and the second time window for a second moving average for the data packet session are missing or are inadequate, i.e. NO in Fig. 13, the network access node 300 determines a first time window for the first moving average and a second time window for a second moving average for the data packet session which are sent to the client device 100 via a second control message 504. At iv) upon reception of the second control message 504 the client device 100 configures the computation of the first moving average value and the second moving averages. At v) as long as a flow is still active, the client device 100 continuously sends the computed first and second moving average value based on the first and second time window for the first and second moving average via a third control message 506, wherein the computations are performed at certain scheduling decision intervals along with a computation of the over-allocation. If the data packet session is not active anymore, i.e. NO in Fig. 13, the flow is terminated and the data packet session at the client device 100 ends at vi) in Fig. 13. When the network access node 300 receives the third control message 506, at vii), it determines whether the data packet session is in a proactive state. If it is in proactive state the network access node 300 checks, at viii), in which proactive state it is, i.e. burst scheduling state or cyclic burst scheduling modelstate, and whether the conditions for a state transition are fulfilled. If the data packet session at the client device 100 is transitioned to or is in burst scheduling state the network access node 300 calculates, at x), the updated scheduling mode for the data packet session for the next cycle, otherwise if it is in cyclic burst state it calculates, at ix), the number of cycles $N_c$ and calculates the updated scheduling mode for the data packet session for these cycles. The updated scheduling mode for the data packet session is sent to the client device 100, via a fourth control message 508 or an updated fourth control message 508', which executes it and reports back, at xi), over-allocated data packet volume and a buffer state for the data packet session by sending a fifth control message 510 and a sixth control message, respectively. Once incoming data for the data packet session does not fulfil proactive state conditions, at v) the data packet session will be dynamically scheduled; once the data packet session becomes inactive or for other reasons is deemed not relevant, the data packet session at the client device 100 is terminated, at vi). Accordingly, in embodiments of the invention the traffic flow indicator corresponds to the content of the first control message 502, the TPI configuration corresponds to the content of the second control message 504, the TPI status information report corresponds to the content of the third control message 506, the proactive scheduling configuration corresponds to the content of the fourth message 508, the over-allocation indicator corresponds to the content of the fifth control message 510 and the buffer state indicator to the content of the sixth control message or is alternatively comprised in the fifth control message 510 as additional information.

For the implementation of embodiments of the invention into the standards various options exist in NG-RAN. Assuming that scheduling is performed within gNB-DU, then the most straightforward approach is to include the functionality of the TP into the gNB-CU and allow interoperation via the F1 interface. The F1 setup function, which allows the exchange of application level data needed for the gNB-DU and gNB-CU to interoperate correctly on the F1 interface, can be extended to include the initial traffic flow information signalling. The flow setup via F1 is initiated by the RAC functionality located in gNB-DU. In addition, the F1 Configuration Update messages can be extended to accommodate the TPI configuration and PS configuration and response messages. The gNB-CU Configuration Update and gNB-DU Configuration Update functions allow to update application level configuration data needed between gNB-CU and gNB-DU to interoperate correctly over the F1 interface.

In an embodiment the invention can be performed over the E1 interface between gNB-CU-CP and gNB-CU-UP which may perform the TP and RAC functionality respectively. The E1 setup function, which allows the exchange of application level data needed for the gNB-CU-UP and gNB-CU-CP to interoperate correctly on the E1 interface, can be extended to facilitate the flow setup interactions between TP and RAC. Similarly, an extension of the gNB-CU-UP Configuration Update and gNB-CU-CP Configuration Update functions would allow to update TPI and PS configurations and reporting between the gNB-CU-CP and the gNB-CU-UP.

In yet another embodiment that may be adopted is the extension of the scheduling without dynamic grant, such as semi-persistent scheduling and its associated signalling between the gNB and the UE. In the uplink, the scheduler may instruct the UE about the TPI configuration, as part of an extension of scheduling request response. The computation of the TPI can be performed at the UE where the application data is generated. In this case the monitoring and reporting for the traffic in RAC is performed at the UE. The TPI status information can be included in an enhanced version of the buffer status report (BSR) which apart from the buffer size it may also include the computed values of the TPIs. The determination of the PS configuration will be determined by the gNB at RRC based on the enhanced BSR and signalled to UE as an extension of the SPS signalling. In an embodiment the SPS signalling can be extended to include the time spreading indicator and/or the proactive scheduling delay indicator as defined above. Furthermore, the SPS signalling extension may include information about the uplink grant, bits/symbols to be sent, the TTIs to be utilized, and other related information that may be accommodated by a new DCI scheduling grant format. In the downlink a similar extension of the SPS signalling may be implemented.

UPF could also be a good option where TP functionality can be implemented as it is where the traffic can be monitored and traffic predictions can be made. In this case the RAC functionality which is implemented within gNB and/or ng-eNB can interact with TP via the NG interface. In LTE, the same interaction would be performed between S-GW and eNB via the S1 interface.

The client device 100 herein, may be denoted as a user device, a User Equipment (UE), a mobile station, an internet of things (IoT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

The network access node 300 herein may also be denoted as a radio network access node, an access network access node, an access point, or a base station, e.g. a Radio Base Station (RBS), which in some networks may be referred to as transmitter, "gNB", "gNodeB", "eNB", "eNodeB", "NodeB" or "B node", depending on the technology and terminology used. The radio network access nodes may be of different classes such as e.g. macro eNodeB, home eNodeB or pico base station, based on transmission power and thereby also cell size. The radio network access node can be a Station (STA), which is any device that contains an IEEE 802.11-conformant Media Access Control (MAC) and Physical Layer (PHY) interface to the Wireless Medium (WM). The radio network access node may also be a base station corresponding to the fifth generation (5G) wireless systems.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the client device 100 and the network access node 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the client device 100 and the network access node 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A client device (100) for a wireless communication system (500), the client device (100) being configured to

transmit a first control message (502) to a network access node (300), wherein the first control message (502) indicates an initial traffic information for a data packet session associated with the client device (100);
receive a second control message (504) from the network access node (300), wherein the second control message (504) indicates a first time window for a first moving average of the data packet session and a second time window for a second moving average of the data packet session;
determine an additional traffic information for the data packet session based on the first time window for the first moving average of the data packet session and the second time window for the second moving average of the data packet session;
transmit a third control message (506) to the network access node (300), wherein the third control message (506) indicates the additional traffic information for the data packet session;
wherein the second time window for the second moving average is equal to a product of the first time window for the first moving average multiplied with a scalar factor;
receive a fourth control message (508) from the network access node (300), wherein the fourth control message (508) indicates a scheduling mode for the data packet session;
schedule data packets of the data packet session based on the scheduling mode;
wherein the fourth control message (508) further comprises an over-allocation report instruction,
determine the over-allocated data packet volume for the scheduled data packet of the data packet session based on the over-allocation report instruction; and

transmit a fifth control message (510) to the network access node (300), wherein the fifth control message (510) indicates the over-allocated data packet volume.

2. The client device (100) according to claim 1, wherein determine the initial traffic information for the data packet session comprises
determine a data packet size distribution of the data packet session and an inter-arrival data packet time distribution of the data packet session.

3. The client device (100) according to any of the preceding claims, wherein determine the additional traffic information for the data packet session comprises

determine a first moving average value of the data packet session based on the first time window for the first moving average,
determine a second moving average of the data packet session based on the second time window for the second moving average.

4. The client device (100) according to claim 1, wherein the scheduling mode comprises a scheduled data packet volume, a scheduling period, a scheduling start time instance, and a data packet transmission spreading pattern.

5. A network access node (300) for a wireless communication system (500), the network access node (300) being configured to

receive a first control message (502) from a client device (100), wherein the first control message (502) indicates an initial traffic information for a data packet session associated with the client device (100);
determine a first time window for a first moving average of the data packet session and a second time window for a second moving average of the data packet session based on the initial traffic information for the data packet session;
transmit a second control message (504) to the client device (100), wherein the second control message (504) indicates the first time window for the first moving average of the data packet session and the second time window for the second moving average of the data packet session;wherein the initial traffic information for the data packet session comprises a data packet size distribution of the data packet session and an inter-arrival data packet time distribution of the data packet session, and wherein the network access node (300) is configured to
determine the first time window for the first moving average based on the data packet size distribution of the data packet session and the inter-arrival data packet time distribution of the data packet session;
determine a scalar factor based on the data packet size distribution of the data packet session and the inter-arrival data packet time distribution of the data packet session,
determine the second time window for the second moving average equal to a product of the first time window for the first moving average multiplied with the scalar factor;
receive a third control message (506) from the client device (100) in response to the transmission of the second control message (504), wherein the third control message (506) indicates an additional traffic information for the data packet session comprising a first moving average value of the data packet session and a second moving average of the data packet session;
determine the scheduling mode for the data packet session based on the first moving average value of the data packet session and the second moving average of the data packet session;
transmit a fourth control message (508) to the client device (100), wherein the fourth control message (508) indicates the scheduling mode for the data packet session;
receive a fifth control message (510) from the client device (100), wherein the fifth control message (510) indicates an over-allocated data packet volume for the data packet session;
determine an updated scheduling mode for the client device (100) based on the over-allocated data packet volume for the data packet session; andtransmit an updated fourth control message (508') to the client device (100), wherein the updated fourth control message (508') indicates the updated scheduling mode.

6. The network access node (300) according to claim 5, wherein the scheduling mode comprises a scheduled data packet volume, a scheduling time period, a scheduling start time instance, and a data packet transmission spreading pattern.

7. The network access node (300) according to claim 5 or 6, configured to

determine the scheduling mode based on a comparison of the additional traffic information with one or more threshold values.

8. A method (200) for a client device (100), the method (200) comprising

transmitting (202) a first control message (502) to a network access node (300), wherein the first control message (502) indicates an initial traffic information for a data packet session associated with the client device (100); receiving (204) a second control message (504) from the network access node (300), wherein the second control message (504) indicates a first time window for a first moving average of the data packet session and a second time window for a second moving average of the data packet session; determining (206) an additional traffic information for the data packet session based on the first time window for the first moving average of the data packet session and the second time window for the second moving average of the data packet session; transmitting (208) a third control message (506) to the network access node (300), wherein the third control message (506) indicates the additional traffic information for the data packet session; receiving a fourth control message (508) from the network access node (300), wherein the fourth control message (508) indicates a scheduling mode for the data packet session; scheduling data packets of the data packet session based on the scheduling mode, wherein the fourth control message (508) further comprises an over-allocation report instruction, determining an over-allocated data packet volume for the scheduled data packet of the data packet session based on the over-allocation report instruction; and transmitting a fifth control message (510) to the network access node (300), wherein the fifth control message (510) indicates the over-allocated data packet volume.

9. A method (400) for a network access node (300), the method (400) comprising

receiving (402) a first control message (502) from a client device (100), wherein the first control message (502) indicates an initial traffic information for a data packet session associated with the client device (100); determining (404) a first time window for a first moving average of the data packet session and a second time window for a second moving average of the data packet session based on the initial traffic information for the data packet session; transmitting (406) a second control message (504) to the client device (100), wherein the second control message (504) indicates the first time window for the first moving average of the data packet session and the second time window for the second moving average of the data packet session; wherein the initial traffic information for the data packet session comprises a data packet size distribution of the data packet session and an inter-arrival data packet time distribution of the data packet session, and wherein the network access node (300) is configured to determining the first time window for the first moving average based on the data packet size distribution of the data packet session and the inter-arrival data packet time distribution of the data packet session; determining a scalar factor based on the data packet size distribution of the data packet session and the inter-arrival data packet time distribution of the data packet session, determining the second time window for the second moving average equal to a product of the first time window for the first moving average multiplied with the scalar factor; receiving a third control message (506) from the client device (100) in response to the transmission of the second control message (504), wherein the third control message (506) indicates an additional traffic information for the data packet session comprising a first moving average value of the data packet session and a second moving average of the data packet session; determining the scheduling mode for the data packet session based on the first moving average value of the data packet session and the second moving average of the data packet session; transmitting a fourth control message (508) to the client device (100), wherein the fourth control message (508) indicates the scheduling mode for the data packet session; receiving a fifth control message (510) from the client device (100), wherein the fifth control message (510) indicates an over-allocated data packet volume for the data packet session; determining an updated scheduling mode for the client device (100) based on the over-allocated data packet volume for the data packet session; and transmitting an updated fourth control message (508') to the client device (100), wherein the updated fourth control message (508') indicates the updated scheduling mode.

**10.** A computer program with a program code for performing a method according to claim 8 or 9 when the computer program runs on a computer.

**Patentansprüche**

**1.** Client-Vorrichtung (100) für ein drahtloses Kommunikationssystem (500), wobei die Client-Vorrichtung (100) zu Folgendem konfiguriert ist:

Übertragen einer ersten Steuernachricht (502) an einen Netzzugangsknoten (300), wobei die erste Steuernachricht (502) anfängliche Verkehrsinformationen für eine Datenpaketsitzung angibt, die der Client-Vorrichtung (100) zugeordnet ist;
Empfangen einer zweiten Steuernachricht (504) von dem Netzzugangsknoten (300), wobei die zweite Steuernachricht (504) ein erstes Zeitfenster für einen ersten gleitenden Durchschnitt der Datenpaketsitzung und ein zweites Zeitfenster für einen zweiten gleitenden Durchschnitt der Datenpaketsitzung angibt;
Bestimmen zusätzlicher Verkehrsinformationen für die Datenpaketsitzung auf Grundlage des ersten Zeitfensters für den ersten gleitenden Durchschnitt der Datenpaketsitzung und des zweiten Zeitfensters für den zweiten gleitenden Durchschnitt der Datenpaketsitzung;
Übertragen einer dritten Steuernachricht (506) an den Netzzugangsknoten (300), wobei die dritte Steuernachricht (506) die zusätzlichen Verkehrsinformationen für die Datenpaketsitzung angibt;
wobei das zweite Zeitfenster für den zweiten gleitenden Durchschnitt gleich einem Produkt des erstens Zeitfensters für den ersten gleitenden Durchschnitt multipliziert mit einem Skalarfaktor ist;
Empfangen einer vierten Steuernachricht (508) von dem Netzzugangsknoten (300), wobei die vierte Steuernachricht (508) einen Planungsmodus für die Datenpaketsitzung angibt;
Planen von Datenpaketen der Datenpaketsitzung auf Grundlage des Planungsmodus;
wobei die vierte Steuernachricht (508) ferner eine Überbelegungsberichtsanweisung umfasst,
Bestimmen des überbelegten Datenpaketvolumens für das geplante Datenpaket der Datenpaketsitzung auf Grundlage der Überbelegungsberichtsanweisung; und
Übertragen einer fünften Steuernachricht (510) an den Netzzugangsknoten (300), wobei die fünfte Steuernachricht (510) das überbelegte Datenpaketvolumen angibt.

**2.** Client-Vorrichtung (100) nach Anspruch 1, wobei das Bestimmen der anfänglichen Verkehrsinformationen für die Datenpaketsitzung Folgendes umfasst:
Bestimmen einer Datenpaketgrößenverteilung der Datenpaketsitzung und einer Zwischenankunftsdatenpaketzeitverteilung der Datenpaketsitzung.

**3.** Client-Vorrichtung (100) nach einem der vorhergehenden Ansprüche, wobei das Bestimmen der zusätzlichen Verkehrsinformationen für die Datenpaketsitzung Folgendes umfasst:

Bestimmen eines ersten gleitenden Durchschnittswerts der Datenpaketsitzung auf Grundlage des ersten Zeitfensters für den ersten gleitenden Durchschnitt,
Bestimmen eines zweiten gleitenden Durchschnitts der Datenpaketsitzung auf Grundlage des zweiten Zeitfensters für den zweiten gleitenden Durchschnitt.

**4.** Client-Vorrichtung (100) nach Anspruch 1, wobei der Planungsmodus ein geplantes Datenpaketvolumen, eine Planungsperiode, eine Planungsstartzeitinstanz und ein Datenpaketübertragungsausbreitungsmuster umfasst.

**5.** Netzzugangsknoten (300) für ein drahtloses Kommunikationssystem (500), wobei der Netzzugangsknoten (300) zu Folgendem konfiguriert ist:

Empfangen einer ersten Steuernachricht (502) von einer Client-Vorrichtung (100), wobei die erste Steuernachricht (502) anfängliche Verkehrsinformationen für eine Datenpaketsitzung angibt, die der Client-Vorrichtung (100) zugeordnet ist;
Bestimmen eines ersten Zeitfensters für einen ersten gleitenden Durchschnitt der Datenpaketsitzung und eines zweiten Zeitfensters für einen zweiten gleitenden Durchschnitt der Datenpaketsitzung auf Grundlage der anfänglichen Verkehrsinformationen für die Datenpaketsitzung;
Übertragen einer zweiten Steuernachricht (504) an die Client-Vorrichtung (100), wobei die zweite Steuernachricht (504) das erste Zeitfenster für den ersten gleitenden Durchschnitt der Datenpaketsitzung und das zweite Zeitfenster für den zweiten gleitenden Durchschnitt der Datenpaketsitzung angibt; wobei die anfänglichen Verkehrsinformationen für die Datenpaketsitzung eine Datenpaketgrößenverteilung der Datenpaketsitzung und eine Zwischenankunftsdatenpaketzeitverteilung der Datenpaketsitzung umfassen und wobei der Netzzugangsknoten (300) zu Folgendem konfiguriert ist:

Bestimmen des ersten Zeitfensters für den ersten gleitenden Durchschnitt auf Grundlage der Datenpaketgrößenverteilung der Datenpaketsitzung und der Zwischenankunftsdatenpaketzeitverteilung der Datenpaketsitzung;

Bestimmen eines Skalarfaktors auf Grundlage der Datenpaketgrößenverteilung der Datenpaketsitzung und der Zwischenankunftsdatenpaketzeitverteilung der Datenpaketsitzung, Bestimmen des zweiten Zeitfensters für den zweiten gleitenden Durchschnitt gleich einem Produkt des erstens Zeitfensters für den ersten gleitenden Durchschnitt multipliziert mit dem Skalarfaktor;

Empfangen einer dritten Steuernachricht (506) von der Client-Vorrichtung (100) als Reaktion auf die Übertragung der zweiten Steuernachricht (504), wobei die dritte Steuernachricht (506) zusätzliche Verkehrsinformationen für die Datenpaketsitzung angibt, die einen ersten gleitenden Durchschnittswert der Datenpaketsitzung und einen zweiten gleitenden Durchschnitt der Datenpaketsitzung umfassen;

Bestimmen des Planungsmodus für die Datenpaketsitzung auf Grundlage des ersten gleitenden Durchschnittswerts der Datenpaketsitzung und des zweiten gleitenden Durchschnittswerts der Datenpaketsitzung;

Übertragen einer vierten Steuernachricht (508) an die Client-Vorrichtung (100), wobei die vierte Steuernachricht (508) den Planungsmodus für die Datenpaketsitzung angibt;

Empfangen einer fünften Steuernachricht (510) von der Client-Vorrichtung (100), wobei die fünfte Steuernachricht (510) ein überbelegtes Datenpaketvolumen für die Datenpaketsitzung angibt;

Bestimmen eines aktualisierten Planungsmodus für die Client-Vorrichtung (100) auf Grundlage des überbelegten Datenpaketvolumens für die Datenpaketsitzung; und Übertragen einer aktualisierten vierten Steuernachricht (508') an die Client-Vorrichtung (100), wobei die aktualisierte vierte Steuernachricht (508') den aktualisierten Planungsmodus angibt.

6. Netzzugangsknoten (300) nach Anspruch 5, wobei der Planungsmodus ein geplantes Datenpaketvolumen, eine Planungsperiode, eine Planungsstartzeitinstanz und ein Datenpaketübertragungsausbreitungsmuster umfasst.

7. Netzzugangsknoten (300) nach Anspruch 5 oder 6, der zu Folgendem konfiguriert ist:
Bestimmen des Planungsmodus auf Grundlage eines Vergleichs der zusätzlichen Verkehrsinformationen mit einem oder mehreren Schwellenwerten.

8. Verfahren (200) für eine Client-Vorrichtung (100), wobei das Verfahren (200) Folgendes umfasst:

Übertragen (202) einer ersten Steuernachricht (502) an einen Netzzugangsknoten (300), wobei die erste Steuernachricht (502) anfängliche Verkehrsinformationen für eine Datenpaketsitzung angibt, die der Client-Vorrichtung (100) zugeordnet ist;

Empfangen (204) einer zweiten Steuernachricht (504) von dem Netzzugangsknoten (300), wobei die zweite Steuernachricht (504) ein erstes Zeitfenster für einen ersten gleitenden Durchschnitt der Datenpaketsitzung und ein zweites Zeitfenster für einen zweiten gleitenden Durchschnitt der Datenpaketsitzung angibt;

Bestimmen (206) zusätzlicher Verkehrsinformationen für die Datenpaketsitzung auf Grundlage des ersten Zeitfensters für den ersten gleitenden Durchschnitt der Datenpaketsitzung und des zweiten Zeitfensters für den zweiten gleitenden Durchschnitt der Datenpaketsitzung;

Übertragen (208) einer dritten Steuernachricht (506) an den Netzzugangsknoten (300), wobei die dritte Steuernachricht (506) die zusätzlichen Verkehrsinformationen für die Datenpaketsitzung angibt;

Empfangen einer vierten Steuernachricht (508) von dem Netzzugangsknoten (300), wobei die vierte Steuernachricht (508) einen Planungsmodus für die Datenpaketsitzung angibt;

Planen von Datenpaketen der Datenpaketsitzung auf Grundlage des Planungsmodus, wobei die vierte Steuernachricht (508) ferner eine Überbelegungsberichtsanweisung umfasst, Bestimmen des überbelegten Datenpaketvolumens für das geplante Datenpaket der Datenpaketsitzung auf Grundlage der Überbelegungsberichtsanweisung; und

Übertragen einer fünften Steuernachricht (510) an den Netzzugangsknoten (300), wobei die fünfte Steuernachricht (510) das überbelegte Datenpaketvolumen angibt.

9. Verfahren (400) für einen Netzzugangsknoten (300), wobei das Verfahren (400) Folgendes umfasst:

Empfangen (402) einer ersten Steuernachricht (502) von einer Client-Vorrichtung (100), wobei die erste Steuernachricht (502) anfängliche Verkehrsinformationen für eine Datenpaketsitzung angibt, die der Client-Vorrichtung (100) zugeordnet ist;

Bestimmen (404) eines ersten Zeitfensters für einen ersten gleitenden Durchschnitt der Datenpaketsitzung und eines zweiten Zeitfensters für einen zweiten gleitenden Durchschnitt der Datenpaketsitzung auf Grundlage der anfänglichen Verkehrsinformationen für die Datenpaketsitzung;

Übertragen (406) einer zweiten Steuernachricht (504) an die Client-Vorrichtung (100), wobei die zweite Steuernachricht (504) das erste Zeitfenster für den ersten gleitenden Durchschnitt der Datenpaketsitzung und das zweite Zeitfenster für den zweiten gleitenden Durchschnitt der Datenpaketsitzung angibt;

wobei die anfänglichen Verkehrsinformationen für die Datenpaketsitzung eine Datenpaketgrößenverteilung der Datenpaketsitzung und eine Zwischenankunftsdatenpaketzeitverteilung der Datenpaketsitzung umfassen und wobei der Netzzugangsknoten (300) zu Folgendem konfiguriert ist:

Bestimmen des ersten Zeitfensters für den ersten gleitenden Durchschnitt auf Grundlage der Datenpaketgrößenverteilung der Datenpaketsitzung und der Zwischenankunftsdatenpaketzeitverteilung der Datenpaketsitzung;

Bestimmen eines Skalarfaktors auf Grundlage der Datenpaketgrößenverteilung der Datenpaketsitzung und der Zwischenankunftsdatenpaketzeitverteilung der Datenpaketsitzung, Bestimmen des zweiten Zeitfensters für den zweiten gleitenden Durchschnitt gleich einem Produkt des erstens Zeitfensters für den ersten gleitenden Durchschnitt multipliziert mit dem Skalarfaktor;

Empfangen einer dritten Steuernachricht (506) von der Client-Vorrichtung (100) als Reaktion auf die Übertragung der zweiten Steuernachricht (504), wobei die dritte Steuernachricht (506) zusätzliche Verkehrsinformationen für die Datenpaketsitzung angibt, die einen ersten gleitenden Durchschnittswert der Datenpaketsitzung und einen zweiten gleitenden Durchschnitt der Datenpaketsitzung umfassen;

Bestimmen des Planungsmodus für die Datenpaketsitzung auf Grundlage des ersten gleitenden Durchschnittswerts der Datenpaketsitzung und des zweiten gleitenden Durchschnittswerts der Datenpaketsitzung;

Übertragen einer vierten Steuernachricht (508) an die Client-Vorrichtung (100), wobei die vierte Steuernachricht (508) den Planungsmodus für die Datenpaketsitzung angibt;

Empfangen einer fünften Steuernachricht (510) von der Client-Vorrichtung (100), wobei die fünfte Steuernachricht (510) ein überbelegtes Datenpaketvolumen für die Datenpaketsitzung angibt;

Bestimmen eines aktualisierten Planungsmodus für die Client-Vorrichtung (100) auf Grundlage des überbelegten Datenpaketvolumens für die Datenpaketsitzung; und

Übertragen einer aktualisierten vierten Steuernachricht (508') an die Client-Vorrichtung (100), wobei die aktualisierte vierte Steuernachricht (508') den aktualisierten Planungsmodus angibt.

10. Computerprogramm mit einem Programmcode zum Durchführen des Verfahrens nach Anspruch 8 oder 9, wenn das Computerprogramm auf einem Computer ausgeführt wird.

## Revendications

1. Dispositif client (100) pour un système de communication sans fil (500), le dispositif client (100) étant configuré pour transmettre un premier message de commande (502) à un noeud d'accès au réseau (300), dans lequel le premier message de commande (502) indique des informations de trafic initiales pour une session de paquets de données associée au dispositif client (100) ;

recevoir un deuxième message de commande (504) du noeud d'accès au réseau (300), dans lequel le deuxième message de commande (504) indique une première fenêtre temporelle pour une première moyenne mobile de la session de paquets de données et une seconde fenêtre temporelle pour une seconde moyenne mobile de la session de paquets de données ;

déterminer des informations de trafic supplémentaires pour la session de paquets de données sur la base de la première fenêtre temporelle pour la première moyenne mobile de la session de paquets de données et de la seconde fenêtre temporelle pour la seconde moyenne mobile de la session de paquets de données ; transmettre un troisième message de commande (506) au noeud d'accès au réseau (300), dans lequel le troisième message de commande (506) indique les informations de trafic supplémentaires pour la session de paquets de données ;

dans lequel la seconde fenêtre temporelle pour la seconde moyenne mobile est égale à un produit de la première fenêtre temporelle pour la première moyenne mobile multipliée par un facteur scalaire ;
recevoir un quatrième message de commande (508) du noeud d'accès au réseau (300), dans lequel le quatrième message de commande (508) indique un mode de planification pour la session de paquets de données ;
planifier des paquets de données de la session de paquets de données sur la base du mode de planification ;
dans lequel le quatrième message de commande (508) comprend en outre une instruction de rapport de surallocation,
déterminer le volume de paquet de données suralloué pour le paquet de données planifié de la session de paquets de données sur la base de l'instruction de rapport de surallocation ; et
transmettre un cinquième message de commande (510) au noeud d'accès au réseau (300), dans lequel le cinquième message de commande (510) indique le volume de paquets de données suralloué.

2. Dispositif client (100) selon la revendication 1, dans lequel la détermination des informations de trafic initiales pour la session de paquets de données comprend
la détermination d'une distribution de taille de paquet de données de la session de paquets de données et d'une distribution de temps de paquet de données entre les arrivées de la session de paquets de données.

3. Dispositif client (100) selon l'une quelconque des revendications précédentes, dans lequel la détermination des informations de trafic supplémentaires pour la session de paquets de données comprend

la détermination d'une première valeur de moyenne mobile de la session de paquets de données sur la base de la première fenêtre temporelle pour la première moyenne mobile,
la détermination d'une seconde moyenne mobile de la session de paquets de données sur la base de la seconde fenêtre temporelle pour la seconde moyenne mobile.

4. Dispositif client (100) selon la revendication 1, dans lequel le mode de planification comprend un volume de paquets de données planifié, une période de planification, une instance de temps de début de planification et un modèle d'étalement de transmission de paquets de données.

5. Noeud d'accès au réseau (300) pour un système de communication sans fil (500), le noeud d'accès au réseau (300) étant configuré pour

recevoir un premier message de commande (502) d'un dispositif client (100), dans lequel le premier message de commande (502) indique des informations de trafic initiales pour une session de paquets de données associée au dispositif client (100) ;
déterminer une première fenêtre temporelle pour une première moyenne mobile de la session de paquets de données et une seconde fenêtre temporelle pour une seconde moyenne mobile de la session de paquets de données sur la base des informations de trafic initiales pour la session de paquets de données ;
transmettre un deuxième message de commande (504) au dispositif client (100), dans lequel le deuxième message de commande (504) indique la première fenêtre temporelle pour la première moyenne mobile de la session de paquets de données et la seconde fenêtre temporelle pour la seconde moyenne mobile de la session de paquets de données ; dans lequel les informations de trafic initiales pour la session de paquets de données comprennent une distribution de taille de paquet de données de la session de paquets de données et une distribution de temps de paquet de données entre les arrivées de la session de paquets de données, et dans lequel le noeud d'accès au réseau (300) est configuré pour
déterminer la première fenêtre temporelle pour la première moyenne mobile sur la base de la distribution de taille de paquet de données de la session de paquets de données et de la distribution de temps de paquet de données entre les arrivées de la session de paquets de données ;
déterminer un facteur scalaire sur la base de la distribution de taille de paquet de données de la session de paquets de données et de la distribution de temps de paquet de données entre les arrivées de la session de paquets de données,
déterminer la seconde fenêtre temporelle pour la seconde moyenne mobile qui est égale à un produit de la première fenêtre temporelle pour la première moyenne mobile multipliée par le facteur scalaire ;
recevoir un troisième message de commande (506) du dispositif client (100) en réponse à la transmission du deuxième message de commande (504), dans lequel le troisième message de commande (506) indique des informations de trafic supplémentaires pour la session de paquets de données comprenant une première valeur moyenne mobile de la session de paquets de données et une seconde moyenne mobile de la session de paquets de données ;
déterminer le mode de planification pour la session de paquets de données sur la base de la première valeur moyenne mobile de la session de paquets de données et de la seconde moyenne mobile de la session de paquets de données ;

transmettre un quatrième message de commande (508) au dispositif client (100), dans lequel le quatrième message de commande (508) indique le mode de planification pour la session de paquets de données ;

recevoir un cinquième message de commande (510) du dispositif client (100), dans lequel le cinquième message de commande (510) indique un volume de paquets de données suralloué pour la session de paquets de données ;

déterminer un mode de planification mis à jour pour le dispositif client (100) sur la base du volume de paquets de données suralloué pour la session de paquets de données ; et transmettre un quatrième message de commande mis à jour (508') au dispositif client (100), dans lequel le quatrième message de commande mis à jour (508') indique le mode de planification mis à jour.

6. Noeud d'accès au réseau (300) selon la revendication 5, dans lequel le mode de planification comprend un volume de paquets de données planifié, une période de temps de planification, une instance de temps de début de planification et un modèle d'étalement de transmission de paquets de données.

7. Noeud d'accès au réseau (300) selon la revendication 5 ou 6, configuré pour
déterminer le mode de planification sur la base d'une comparaison des informations de trafic supplémentaires avec une ou plusieurs valeurs seuil.

8. Procédé (200) pour un dispositif client (100), le procédé (200) comprenant

la transmission (202) d'un premier message de commande (502) à un noeud d'accès au réseau (300), dans lequel le premier message de commande (502) indique des informations de trafic initiales pour une session de paquets de données associée au dispositif client (100) ;

la réception (204) d'un deuxième message de commande (504) du noeud d'accès au réseau (300), dans lequel le deuxième message de commande (504) indique une première fenêtre temporelle pour une première moyenne mobile de la session de paquets de données et une seconde fenêtre temporelle pour une seconde moyenne mobile de la session de paquets de données ;

la détermination (206) d'informations de trafic supplémentaires pour la session de paquets de données sur la base de la première fenêtre temporelle pour la première moyenne mobile de la session de paquets de données et de la seconde fenêtre temporelle pour la seconde moyenne mobile de la session de paquets de données ;

la transmission (208) d'un troisième message de commande (506) au noeud d'accès au réseau (300), dans lequel le troisième message de commande (506) indique les informations de trafic supplémentaires pour la session de paquets de données ;

la réception d'un quatrième message de commande (508) du noeud d'accès au réseau (300), dans lequel le quatrième message de commande (508) indique un mode de planification pour la session de paquets de données ;

la planification de paquets de données de la session de paquets de données sur la base du mode de planification, dans lequel le quatrième message de commande (508) comprend en outre une instruction de rapport de surallocation, déterminant un volume de paquets de données suralloué pour le paquet de données planifié de la session de paquets de données sur la base de l'instruction de rapport de surallocation ; et

la transmission d'un cinquième message de commande (510) au noeud d'accès au réseau (300), dans lequel le cinquième message de commande (510) indique le volume de paquets de données suralloué.

9. Procédé (400) pour un noeud d'accès au réseau (300), le procédé (400) comprenant

la réception (402) d'un premier message de commande (502) d'un dispositif client (100), dans lequel le premier message de commande (502) indique des informations de trafic initiales pour une session de paquets de données associée au dispositif client (100) ;

la détermination (404) d'une première fenêtre temporelle pour une première moyenne mobile de la session de paquets de données et d'une seconde fenêtre temporelle pour une seconde moyenne mobile de la session de paquets de données sur la base des informations de trafic initiales pour la session de paquets de données ;

la transmission (406) d'un deuxième message de commande (504) au dispositif client (100), dans lequel le deuxième message de commande (504) indique la première fenêtre temporelle pour la première moyenne mobile de la session de paquets de données et la seconde fenêtre temporelle pour la seconde moyenne mobile de la session de paquets de données ;

dans lequel les informations de trafic initiales pour la session de paquets de données comprennent une distribution de taille de paquet de données de la session de paquets de données et une distribution de temps de paquet de données entre les arrivées de la session de paquets de données, et dans lequel le noeud d'accès au réseau (300) est configuré pour

déterminer la première fenêtre temporelle pour la première moyenne mobile sur la base de la distribution de taille de paquet de données de la session de paquets de données et de la distribution de temps de paquet de données entre les arrivées de la session de paquets de données ;

déterminer un facteur scalaire sur la base de la distribution de taille de paquet de données de la session de paquets de données et la distribution de temps de paquet de données entre les arrivées de la session de paquets de données,

déterminer la seconde fenêtre temporelle pour la seconde moyenne mobile égale à un produit de la première fenêtre temporelle pour la première moyenne mobile multipliée par le facteur scalaire ; recevoir un troisième message de commande (506) du dispositif client (100) en réponse à la transmission du deuxième message de commande (504), dans lequel le troisième message de commande (506) indique des informations de trafic supplémentaires pour la session de paquets de données comprenant une première valeur moyenne mobile de la session de paquets de données et une seconde moyenne mobile de la session de paquets de données ;

déterminer le mode de planification pour la session de paquets de données sur la base de la première valeur moyenne mobile de la session de paquets de données et de la seconde moyenne mobile de la session de paquets de données ;

transmettre un quatrième message de commande (508) au dispositif client (100), dans lequel le quatrième message de commande (508) indique le mode de planification pour la session de paquets de données ;

recevoir un cinquième message de commande (510) du dispositif client (100), dans lequel le cinquième message de commande (510) indique un volume de paquets de données suralloué pour la session de paquets de données ;

déterminer un mode de planification mis à jour pour le dispositif client (100) sur la base du volume de paquets de données suralloué pour la session de paquets de données ; et

transmettre un quatrième message de commande mis à jour (508') au dispositif client (100), dans lequel le quatrième message de commande mis à jour (508') indique le mode de planification mis à jour.

10. Programme informatique avec un code de programme pour exécuter le procédé selon la revendication 8 ou 9 lorsque le programme informatique s'exécute sur un ordinateur.

100

110

102 ←→ 104

108

106

Fig. 1

200

202

204

206

208

Fig. 2

300

310

302

304

308

312

306

Fig. 3

400

402

404

404

Fig. 4

500

Fig. 5

500

100

300

502

504

506

508

510

508´

I

II

III

IV

V

VI

Fig. 6

Fig. 7

Fig. 8

Fig. 9

Fig. 10

Fig. 11a

Fig. 11b

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170019914 A